(19) **Europäisches Patentamt**
**European Patent Office**
**Office européen des brevets**

(11) **EP 4 726 627 A1**

(12) **EUROPEAN PATENT APPLICATION**
published in accordance with Art. 153(4) EPC

(43) Date of publication:
**15.04.2026 Bulletin 2026/16**

(51) International Patent Classification (IPC):
*G06Q 10/20* (2023.01)   *G06Q 10/04* (2023.01)
*G06Q 50/40* (2024.01)

(21) Application number: **24818947.4**

(22) Date of filing: **04.01.2024**

(52) Cooperative Patent Classification (CPC):
**G06Q 10/04; G06Q 10/20; G06Q 50/40**

(86) International application number:
**PCT/JP2024/000023**

(87) International publication number:
**WO 2024/252704 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.06.2023 JP 2023093105**

(71) Applicant: **Hitachi, Ltd.**
**Tokyo 100-8280 (JP)**

(72) Inventors:
• **MORI Sho**
**Tokyo 100-8280 (JP)**

• **YANO Kojin**
**Tokyo 100-8280 (JP)**
• **NAGAYOSHI Tsutomu**
**Tokyo 100-8280 (JP)**
• **KOBAYASHI Yuichi**
**Tokyo 100-8280 (JP)**
• **HIRANO Kiichi**
**Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(54) **MAINTENANCE PLANNING ASSISTANCE SYSTEM AND METHOD FOR GENERATING FACILITY MAINTENANCE PLAN**

(57)     This maintenance planning assistance system holds device state information for managing a recommended maintenance timing for each facility device. The recommended maintenance timing refers to a point of time at which the cost required for maintenance of a device is low and the failure rate of the device is low. The maintenance planning assistance system: generates a plurality of lists which are for each facility and which serve as a first optimization problem for which a device list of a facility on which maintenance is performed at a maintenance timing is retrieved, such generation performed by using a constraint condition related to the probability of a failure occurrence in the facility, and an evaluation value calculated using a facility maintenance cost loss that evaluates an economic loss due to device maintenance at a timing offset from the recommended maintenance timing; and generates a plurality of maintenance plans which are for a plurality of facilities and which serve as a second optimization problem for which a maintenance plan, which is a combination of maintenance date and time, resource allocation, and list, is retrieved, such generation performed by using a second constraint condition related to the probability of a failure occurrence in the facility and the resource required for the device maintenance, and a total evaluation value calculated by using the evaluation value.

EP 4 726 627 A1

FIG. 1

**Description**

Technical Field

This invention relates to a system and a method which support drafting of a maintenance plan for a facility formed of a plurality of pieces of equipment.

Background Art

A mobility business operator executes maintenance for a vehicle facility formed of a plurality of pieces of equipment in order to secure safety and achieve stable transport. In the maintenance, each piece of equipment of the vehicle facility is inspected, and in a case where a measurement value acquired through the inspection is larger than a threshold value or each piece of equipment reaches a maintenance time, the equipment is replaced or repaired. The threshold value and a replacement cycle of each piece of equipment are set by a manufacturer of the equipment or the mobility business operator. A series of actions including inspection and replacement or repair is hereinafter referred to as "maintenance."

As a technology for generating a maintenance plan, there have been known, for example, technologies as described in Patent Literature 1 and Patent Literature 2.

Citation List

Patent Literature

   [PTL 1] JP 2020-004403 A
   [PTL 2] JP 2022-181069 A

Summary of Invention

Technical Problem

When the technologies as described in Patent Literature 1 and Patent Literature 2 are combined with each other, it is possible to draft a maintenance plan with slight violation of constraints in consideration of a risk and a cost. However, in a case where there exists violation of a constraint relating to resources for executing maintenance for a facility, a work time and an execution place cannot be fully secured, and hence a delay in the maintenance occurs.

A vehicle facility operated by the mobility business operator is often operated after the maintenance, and hence the delay in the maintenance influences an operation plan of the vehicle. As a result, time and labor are required for adjusting plans for the maintenance work and the vehicle operation. Thus, the maintenance plan drafted through use of the above-mentioned technologies is not actually an optimal plan in terms of risk and cost.

This invention is to achieve a technology which supports drafting of a maintenance plan which satisfies constraints relating to resources and is low in cost required for maintenance.

Solution to Problem

A description is now given of a representative example of this invention disclosed in this application. Specifically, a maintenance planning assistance system for generating a maintenance plan for a facility which is used for execution of a service and are formed of a plurality of pieces of equipment, comprises a computer including a processor, a storage device coupled to the processor, and an interface coupled to the processor. The maintenance planning assistance system is configured to: couple to a system that operates a plurality of the facilities; and hold equipment state information for managing a recommended maintenance time of each of the plurality of pieces of equipment of the facility. The recommended maintenance time is a time at which a cost required to maintain the each of the plurality of pieces of equipment is low and a failure rate of the each of the plurality of pieces of equipment is low. The processor is configured to execute: first processing of generating, for each facility, a plurality of maintenance equipment lists, each of which is a combination of pieces of equipment of the facility to be maintained at a maintenance time, as a first optimization problem in which a first constraint condition relating to a probability of a defect occurrence in the facility and an evaluation value calculated through use of a facility maintenance cost loss for evaluating an economic loss caused by the maintenance of the each of the plurality of pieces of equipment at a time deviating from the recommended maintenance time are used to search for one of the plurality of maintenance equipment lists; and second processing of generating, for each of the plurality of the facilities, a plurality of maintenance plans, each of which is a combination of a maintenance date and time, allocation of a resource, and one of the plurality of maintenance equipment lists, as a second optimization problem in which a second constraint condition relating to a total of the probabilities of the defect occurrence in the facility and the resource required to maintain the each of the plurality of pieces of equipment and a comprehensive evaluation value calculated through use of the evaluation values are used to search for one of the plurality of maintenance plans.

Advantageous Effects of Invention

According to this invention, the maintenance plan which satisfies the constraints relating to the resources and is low in cost required for the maintenance can be drafted. Other problems, configurations, and effects than those described above will become apparent in the descriptions of embodiments below.

Brief Description of Drawings

[FIG. 1] FIG. 1 is a diagram for illustrating an example of a configuration of a maintenance planning assistance system according to a first embodiment of this invention.
[FIG. 2] FIG. 2 is a diagram for illustrating an example of a hardware configuration of a computer forming the maintenance planning assistance system according to the first embodiment.
[FIG. 3] FIG. 3 is a table for showing an example of a data structure of service operation information in the first embodiment.
[FIG. 4] FIG. 4 is a table for showing an example of a data structure of railway state information in the first embodiment.
[FIG. 5] FIG. 5 is a table for showing an example of a data structure of vehicle facility operation information in the first embodiment.
[FIG. 6] FIG. 6 is a table for showing an example of a data structure of equipment state information in the first embodiment.
[FIG. 7] FIG. 7 is a table for showing an example of a data structure of equipment specification information in the first embodiment.
[FIG. 8] FIG. 8 is a table for showing an example of a data structure of maintenance work information in the first embodiment.
[FIG. 9] FIG. 9 is a table for showing an example of a data structure of work track information in the first embodiment.
[FIG. 10] FIG. 10 is a table for showing an example of a data structure of worker information in the first embodiment.
[FIG. 11] FIG. 11 is a table for showing an example of a data structure of maintenance deadline information in the first embodiment.
[FIG. 12] FIG. 12 is a table for showing an example of a data structure of maintenance equipment list information in the first embodiment.
[FIG. 13] FIG. 13 is a table for showing an example of a data structure of maintenance plan information in the first embodiment.
[FIG. 14] FIG. 14 is a flowchart for illustrating processing executed by the maintenance planning assistance system according to the first embodiment.
[FIG. 15] FIG. 15 is a flowchart for illustrating travel load calculation processing executed by the maintenance planning assistance system according to the first embodiment.
[FIG. 16] FIG. 16 is a flowchart for illustrating recommended maintenance period calculation processing executed by the maintenance planning assistance system according to the first embodiment.
[FIG. 17] FIG. 17 is a flowchart for illustrating optimization processing for the maintenance equipment list executed by the maintenance planning assistance system according to the first embodiment.
[FIG. 18] FIG. 18 is a flowchart for illustrating maintenance evaluation value calculation processing executed by the maintenance planning assistance system according to the first embodiment.
[FIG. 19] FIG. 19 is a flowchart for illustrating maintenance plan optimization processing executed by the maintenance planning assistance system according to the first embodiment.
[FIG. 20] FIG. 20 is a flowchart for illustrating comprehensive evaluation value calculation processing executed by the maintenance planning assistance system according to the first embodiment.
[FIG. 21] FIG. 21 is a flowchart for illustrating adjustment processing executed by the maintenance planning assistance system according to the first embodiment.
[FIG. 22] FIG. 22 is a view for illustrating an example of a screen presented by the maintenance planning assistance system according to the first embodiment.

[FIG. 23] FIG. 23 is a table for showing an example of a data structure of the maintenance equipment list information in the second embodiment.
[FIG. 24] FIG. 24 is a flowchart for illustrating the maintenance evaluation value calculation processing executed by the maintenance planning assistance system according to the second embodiment.
[FIG. 25] FIG. 25 is a flowchart for illustrating the comprehensive evaluation value calculation processing executed by the maintenance planning assistance system according to the second embodiment.
[FIG. 26] FIG. 26 is a view for illustrating an example of a screen presented by the maintenance planning assistance system according to the second embodiment.

Description of Embodiments

Now, embodiments of this invention are described with reference to the drawings. It should be noted that this invention is not to be construed by limiting the invention to the content described in the following embodiments. A person skilled in the art would easily recognize that specific configurations described in the following embodiments may be changed within the scope of the concept and the gist of this invention.

In the configurations of this invention described below, the same or similar components or functions are denoted by the same reference numerals, and a redundant description thereof is omitted.

Notations of, for example, "first," "second," and "third" herein are assigned to distinguish between components, and do not necessarily limit the number or order of those components.

The position, size, shape, range, and others of each component illustrated in, for example, the drawings may not represent the actual position, size, shape, range, and others in order to facilitate understanding of this invention. Thus, this invention is not limited to the position, size, shape, range, and others disclosed in, for example, the drawings.

In the embodiments of this invention, a railway business is assumed as an example of a mobility business. It should be noted that in this invention, there is no limitation on the type of the mobility business.

Here, a problem in drafting of a maintenance plan for vehicle facilities is described. When the number of vehicle facilities, the number of pieces of equipment forming a vehicle facility, and the number of maintenance periods are large, the number of conceivable maintenance plans is very large. There is an upper limit of resources for maintenance work held by a mobility business operator. Moreover, for one vehicle facility, it is required to determine maintenance equipment at each maintenance time. Thus, in order to determine the maintenance equipment at a certain maintenance time of a certain vehicle, it is required to make adjustment among the vehicle facilities and the maintenance times.

For example, there exist $N$ facilities each formed of n pieces of equipment and P maintenance periods, the number of combination patterns to be considered is $2^{(N \times n \times P)}$.

Thus, in order to draft the maintenance plan with a realistic calculation amount, it is required to consider constraints relating to the resources, and then solve "generation of patterns of maintenance equipment of each vehicle facility" and "selection of a pattern employed at the maintenance time" as problems independent of each other.

Specifically, a plurality of maintenance equipment patterns are generated for each vehicle facility, and the maintenance equipment pattern of each vehicle facility is selected at a certain maintenance time. When C maintenance equipment patterns are generated for each vehicle, the number of patterns to be considered at the maintenance time is NC. An operation of selecting the maintenance equipment pattern for one maintenance time is repeatedly executed. As a result, a medium- to long-term maintenance plan can be drafted.

However, with the above-mentioned method, there is a possibility that the equipment is not maintained at an appropriate time from a medium- to long-term viewpoint. An optimal maintenance time for the equipment is defined in consideration of the cost for the maintenance and failure characteristics. In other words, the optimal maintenance time is defined such that both of the cost of the maintenance and a risk of the failure decrease. Thus, it is desired that the equipment be maintained at the optimal maintenance time. However, in a case where the maintenance plan at one maintenance time is repeatedly generated based on the risk and the cost, each piece of equipment cannot be maintained at the optimal maintenance time.

(Case 1) There is considered a case in which the maintenance equipment of each vehicle facility is selected such that the risk is small while the constraints relating to the resources are satisfied. In this case, equipment having a high failure rate at the maintenance time is preferentially selected as a target of the maintenance. Meanwhile, equipment having a low failure rate at the maintenance time is not maintained even after the optimal maintenance time. In other words, in a case where the processing of selecting the maintenance equipment such that the risk at the maintenance time is reduced is repeated, each piece of equipment is not maintained at the optimal maintenance time.

(Case 2) There is considered a case in which the maintenance equipment of each vehicle facility is selected such that the cost is reduced while the risk of the vehicle facility is suppressed to a certain level or lower. In this case, equipment low in maintenance cost is preferentially maintained. Meanwhile, equipment high in maintenance cost is not maintained even when the risk is high. In other words, in a case where the processing of selecting the maintenance equipment such that the cost at the maintenance time is reduced is repeated, each piece of equipment is not maintained at the optimal maintenance time.

As described above, with the method of repeating the selection of the maintenance equipment of each vehicle facility based on the evaluation index such as a simple risk or cost, each piece of equipment cannot be maintained at the optimal maintenance time.

In the embodiments, the railway business which uses vehicle facilities each formed of a plurality of pieces of equipment is assumed. It is assumed that the maintenance of the vehicle facility is executed at a depot. It is assumed that a plurality of railways (tracks) on which the vehicle facility is maintained exist in the depot. Maintenance work at the depot is executed by workers. The track and the worker are treated as the resources used for the maintenance.

[First Embodiment]

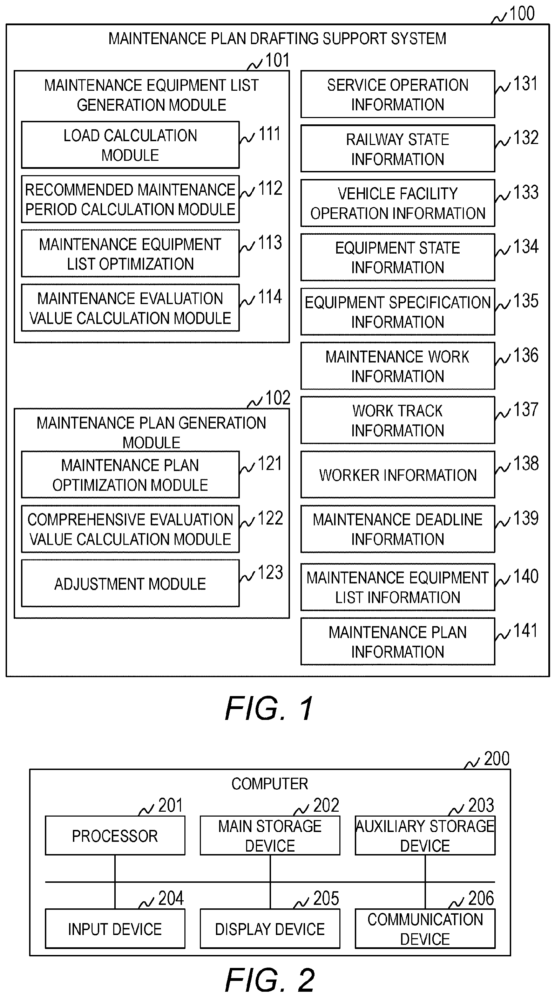

FIG. 1 is a diagram for illustrating an example of a configuration of a maintenance planning assistance system according to a first embodiment of this invention. FIG. 2 is a diagram for illustrating an example of a hardware configuration of a computer forming the maintenance planning assistance system according to the first embodiment.

A maintenance planning assistance system 100 is formed of a computer 200 as illustrated in FIG. 2. The number of computers 200 forming the maintenance planning assistance system 100 is not limited.

The computer 200 includes a processor 201, a main storage device 202, an auxiliary storage device 203, an input device 204, a display device 205, and a communication device 206. The hardware elements are coupled to one another via a bus.

The input device 204 is a keyboard, a mouse, and the like, and receives input of data and an instruction. An administrator of maintenance work operates the input device 204 to instruct generation of the maintenance plan. When this instruction is received, the maintenance planning assistance system 100 drafts the maintenance plan in consideration of the risk and the cost of the equipment of the vehicle facility and the resources of the depot. The display device 205 is a display or the like, and displays setting information, a processing result, and the like.

The main storage device 202 is a memory or the like, and stores a program executed by the processor 201 and data used by the program. The main storage device 202 is used also as a work area. The auxiliary storage device 203 is, for example, a hard disk drive (HDD) or the like, and non-transitorily stores a program and information.

The auxiliary storage device 203 stores a program which implements a maintenance equipment list generation module 101 and a maintenance plan generation module 102. Moreover, the auxiliary storage device 203 stores service operation information 131, railway state information 132, vehicle facility operation information 133, equipment state information 134, equipment specification information 135, maintenance work information 136, work track information 137, worker information 138, maintenance deadline information 139, maintenance equipment list information 140, and maintenance plan information 141.

The processor 201 executes the program, to thereby operate as a function module (module) which implements a specific function. In the following description, a case in which the processing is described while a function module is used as a subject of a sentence indicates that the processor 201 is executing a program which implements this function module.

The communication device 206 communicates to and from the vehicle facility or a system which manages the mobility service.

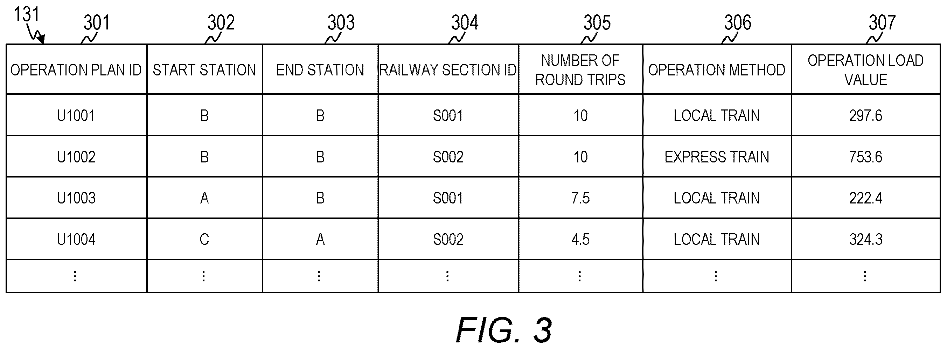

Now, with reference to FIG. 3 to FIG. 13, description is given of information held by the maintenance planning assistance system 100.

FIG. 3 is a table for showing an example of a data structure of the service operation information 131 in the first embodiment.

The service operation information 131 is information for managing an operation plan of the mobility service. The service operation information 131 stores entries each including an operation plan **ID** 301, a start station 302, an end station 303, a railway section **ID** 304, a number of round trips 305, an operation method 306, and an operation load value 307. One entry exists for one operation plan. The fields contained in one entry are an example, and the fields are not limited to this example. Any one of the above-mentioned fields may not be included, or another field may be included.

The operation plan **ID** 301 is a field which stores an **ID** of the operation plan. The start station 302 is a field which stores a station at which the vehicle facility exists at a start of the operation plan. The end station 303 is a field which stores a station at which the vehicle facility exists at an end of the operation plan. The railway section **ID** 304 is a field which stores an **ID** of a section (railway section) in which the vehicle facility travels, and is the same field as a railway section **ID** 401 described later. The number of round trips 305 is a field which stores the number of times of a round trip made by the vehicle facility in the railway section. The operation method 306 is a field which stores an operation method for the vehicle facility. The operation load value 307 is a field which stores a value (operation load value) indicating a load of the operation plan.

The service operation information 131 may be set in advance, or may be acquired from the outside. A value calculated by the maintenance planning assistance system 100 is stored in the operation load value 307.

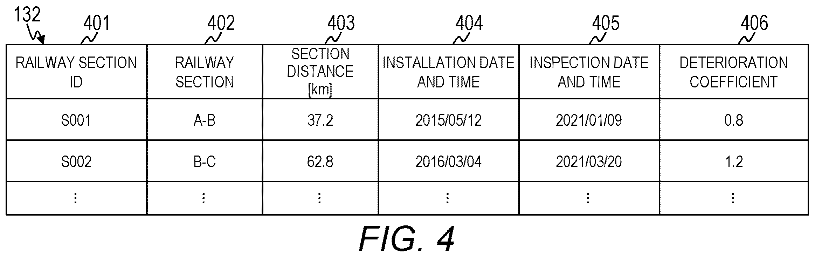

FIG. 4 is a table for showing an example of a data structure of the railway state information 132 in the first embodiment.

The railway state information 132 is information for managing a state of the railway section. The railway state information 132 stores entries each including the railway section ID 401, a railway section 402, a section distance 403, an installation date and time 404, an inspection date and time 405, and a deterioration coefficient 406. One entry exists for one railway section. The fields contained in one entry are an example, and the fields are not limited to this example. Any one of the above-mentioned fields may not be included, or another field may be included.

The railway section ID 401 is a field which stores the ID of the railway section. The railway section 402 is a field which stores a railway section. For example, a combination of stations is stored as information indicating the railway section. The section distance 403 is a field which stores a distance of the railway section. The installation date and time 404 is a field which stores a date and a time at which the railway of the railway section was installed. The inspection date and time 405 is a field which stores a date and a time at which the railway of the railway section was inspected. In the inspection date and time 405, the latest inspection date and time are stored. The deterioration coefficient 406 is a field which stores a deterioration coefficient which indicates influence on the travel of the vehicle facility by deterioration of the railway of the railway section.

The railway state information 132 may be set in advance, or may be acquired from the outside.

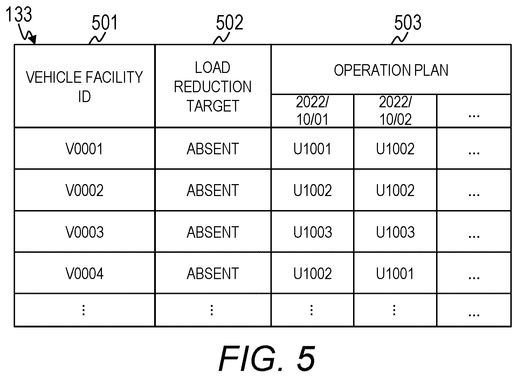

FIG. 5 is a table for showing an example of a data structure of the vehicle facility operation information 133 in the first embodiment.

The vehicle facility operation information 133 is information for managing the operation of the vehicle facility. The vehicle facility operation information 133 stores entries each including a vehicle facility ID 501, a load reduction target 502, and an operation plan 503. One entry exists for one vehicle facility. The fields contained in one entry are an example, and the fields are not limited to this example. Any one of the above-mentioned fields may not be included, or another field may be included.

The vehicle facility ID 501 is a field which stores an ID of the vehicle facility. The load reduction target 502 is a field which stores a flag used by the maintenance planning assistance system 100. In the load reduction target 502, "absent" is set as an initial value. The operation plan 503 is a field which stores an ID of the operation plan executed by the vehicle facility. The operation plan 503 includes columns each indicating a date and a time, and the ID of the operation plan is stored in each column.

The vehicle facility operation information 133 may be set in advance, or may be acquired from the outside.

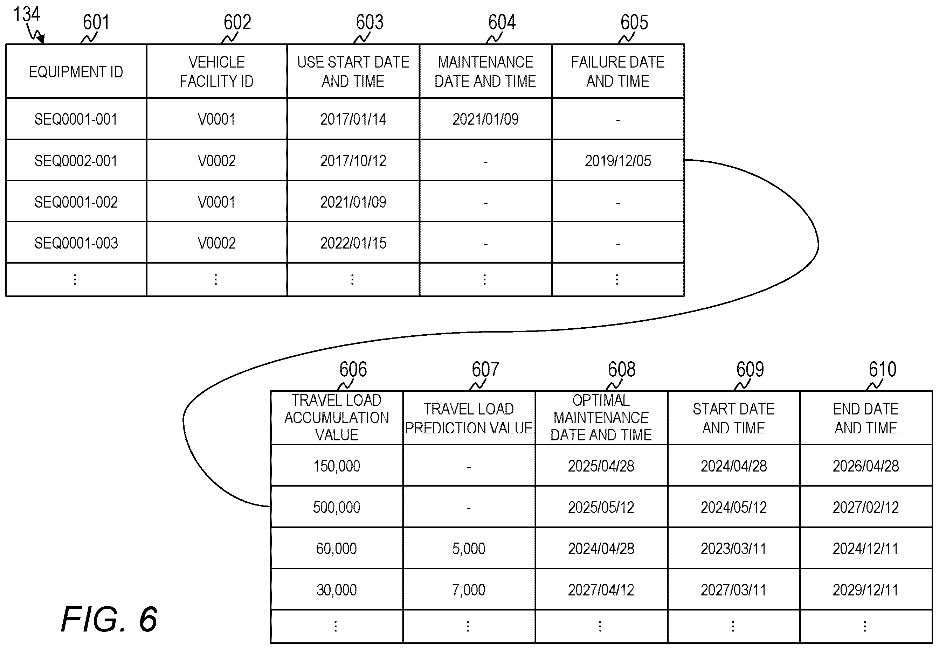

FIG. 6 is a table for showing an example of a data structure of the equipment state information 134 in the first embodiment.

The equipment state information 134 is information for managing a state of the equipment of the vehicle facility. The equipment state information 134 stores entries each including an equipment ID 601, a vehicle facility ID 602, a use start date and time 603, a maintenance date and time 604, a failure date and time 605, a travel load accumulation value 606, a travel load prediction value 607, an optimal maintenance date and time 608, a start date and time 609, and an end date and time 610. For a combination of the equipment and the vehicle facility, one entry exists. The fields contained in one entry are an example, and the fields are not limited to this example. Any one of the above-mentioned fields may not be included, or another field may be included.

The equipment ID 601 is a field which stores an ID of the equipment of the vehicle facility. In this embodiment, the ID of the equipment is formed of a type of the equipment and an individual number of the equipment. The vehicle facility ID 602 is the same field as the vehicle facility ID 501.

The use start date and time 603 is a field which stores a date and a time at which the use of the equipment was started. The maintenance date and time 604 is a field which stores a date and a time at which the maintenance was executed before failure. The failure date and time 605 is a field which stores a date and a time of the failure of the equipment.

The travel load accumulation value 606 is a field which stores an accumulation value of a travel load from the use start date and time to the current time. The travel load prediction value 607 is a field which stores a prediction value of a travel load from the current time to the maintenance time.

The optimal maintenance date and time 608 is a field which stores an optimal replacement date and time of the equipment determined from the viewpoints of the cost of the maintenance and a risk of a failure. The start date and time 609 and the end date and time 610 are fields which store a start date and time and an end date and time, respectively, of a period (recommended maintenance period) in which the maintenance of equipment is recommended.

The equipment state information 134 may be set in advance, or may be acquired from the outside. In the travel load accumulation value 606, the travel load prediction value 607, the optimal maintenance date and time 608, the start date and time 609, and the end date and time 610, values calculated by the maintenance planning assistance system 100 are stored.

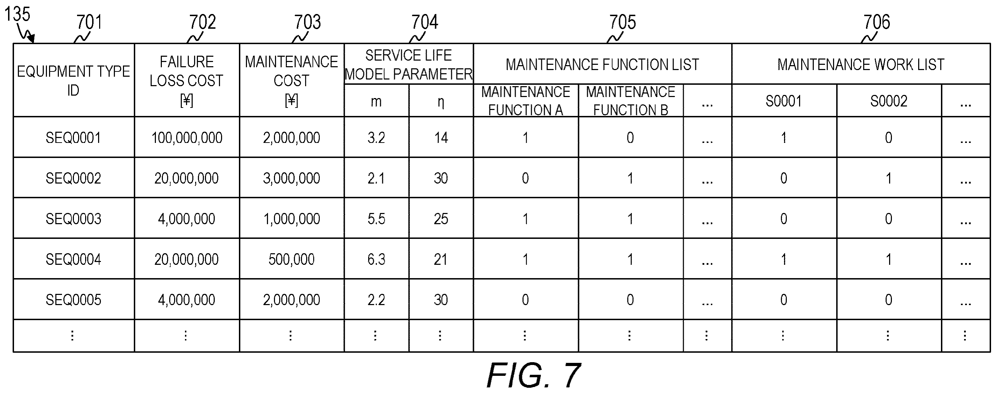

FIG. 7 is a table for showing an example of a data structure of the equipment specification information 135 in the first embodiment.

The equipment specification information 135 is information for managing specifications of the equipment. The equipment specification information 135 stores entries each including an equipment type ID 701, a failure loss cost 702, a maintenance cost 703, a service life parameter 704, a maintenance function list 705, and a maintenance work list 706. One entry exists for one type of equipment. The fields contained in one entry are an example, and the fields are not limited to this example. Any one of the above-mentioned fields may not be included, or another field may be included.

The equipment type ID 701 is a field which stores an ID indicating a type of the equipment. The failure loss cost 702 is a field which stores an economic loss incurred as a result of the failure of the equipment. The maintenance cost 703 is a field which stores a cost required to maintain the equipment.

The service life parameter 704 is a field group which stores parameters indicating a service life model of the equipment. In this embodiment, parameters of a service life model which follows the Weibull distribution are stored.

The maintenance function list 705 is a field which stores information relating to functions required for the track on which the equipment is maintained. In this embodiment, the maintenance function list 705 includes columns indicating the functions. In each column, any one of "0" indicating that the function is not required or "1" indicating that the function is required is set.

The maintenance work list 706 is a field which stores information relating to work required to be executed in the maintenance of the equipment. In this embodiment, the maintenance work list 706 includes columns indicating work. In each column, any one of "0" indicating that the execution of the work is not required or "1" indicating that the execution of the work is required is set.

The equipment specification information 135 may be set in advance, or may be acquired from the outside.

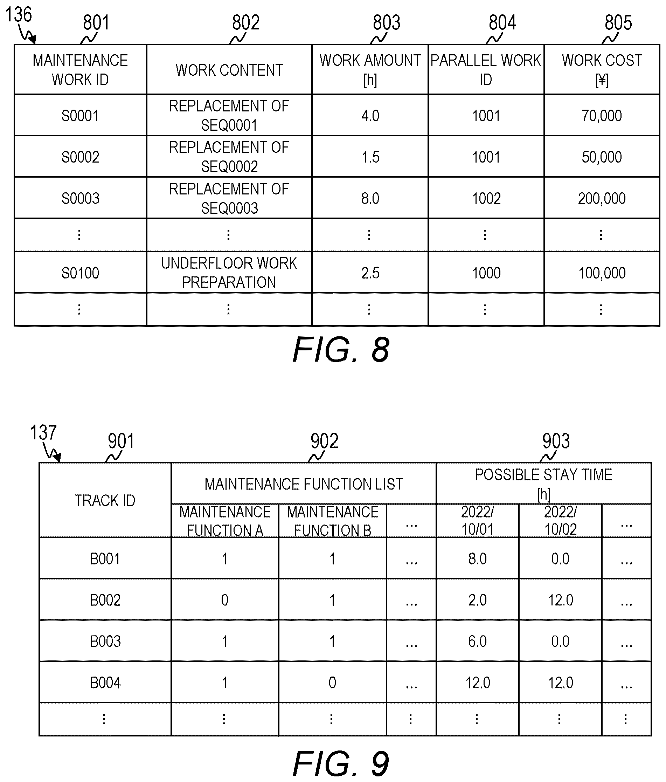

FIG. 8 is a table for showing an example of a data structure of the maintenance work information 136 in the first embodiment.

The maintenance work information 136 is information for managing details of the maintenance work. The maintenance work information 136 stores entries each including a maintenance work ID 801, work content 802, a work amount 803, a parallel work ID 804, and a work cost 805. One entry exists for one piece of maintenance work. The fields contained in one entry are an example, and the fields are not limited to this example. Any one of the above-mentioned fields may not be included, or another field may be included.

The maintenance work ID 801 is a field which stores an ID of the maintenance work. The work content 802 is a field which stores specific content of the maintenance work. The work amount 803 is a field which stores a work amount of the maintenance work. In the work amount 803, an execution time of the maintenance work is stored. The parallel work ID 804 is a field which stores an ID for managing maintenance work which can be executed in parallel. The same ID is set for the maintenance work which can be executed in parallel. The work cost 805 is a field which stores a cost of the maintenance work.

The maintenance work information 136 may be set in advance, or may be acquired from the outside.

FIG. 9 is a table for showing an example of a data structure of the work track information 137 in the first embodiment.

The work track information 137 is information for managing the work tracks. The work track information 137 stores entries each including a track ID 901, a maintenance function list 902, and a possible stay time 903. One entry exists for one work track. The fields contained in one entry are an example, and the fields are not limited to this example. Any one of the above-mentioned fields may not be included, or another field may be included.

The track ID 901 is a field which stores an ID of the work track. The maintenance function list 902 is a field which stores information relating to availability of a function used for the maintenance of the equipment. In this embodiment, the maintenance function list 902 includes columns each indicating the function. In each column, any one of "0" indicating that the function is unavailable or "1" indicating that the function is available is set. The possible stay time 903 is a field which stores a time in which the work track can be used. The possible stay time 903 includes columns each indicating a date and a time, and a period of time for which the work track can be used is stored in each column.

The work track information 137 may be set in advance, or may be acquired from the outside.

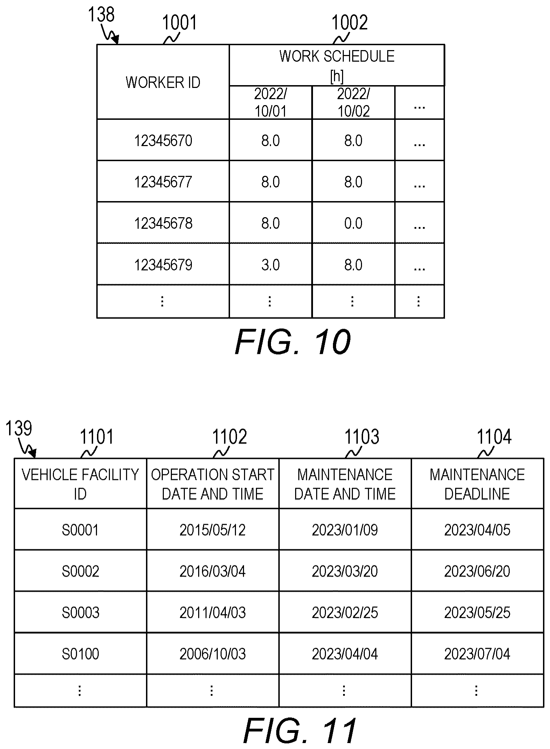

FIG. 10 is a table for showing an example of a data structure of the worker information 138 in the first embodiment.

The worker information 138 is information for managing a worker who executes the maintenance work. The worker information 138 stores entries each including a worker ID 1001 and a work schedule 1002. One entry exists for one worker. The fields contained in one entry are an example, and the fields are not limited to this example. Any one of the above-mentioned fields may not be included, or another field may be included.

The worker ID 1001 is a field which stores an ID of the worker. The work schedule 1002 is a field which stores a period of time for which the worker can work. The work schedule 1002 includes columns each indicating a date and a time, and a possible work time of the worker is stored in each column.

The worker information 138 may be set in advance, or may be acquired from the outside.

FIG. 11 is a table for showing an example of a data structure of the maintenance deadline information 139 in the first embodiment.

The maintenance deadline information 139 is information for managing a maintenance deadline of the vehicle facility. The maintenance deadline information 139 stores entries each including a vehicle facility ID 1101, an operation start date and time 1102, a maintenance date and time 1103, and a maintenance deadline 1104. One entry exists for one vehicle facility. The fields contained in one entry are an example, and the fields are not limited to this example. Any one of the above-mentioned fields may not be included, or another field may be included.

The vehicle facility ID 1101 is the same field as the vehicle facility ID 501. The operation start date and time 1102 is a field which stores a date and a time of a start of the operation of the vehicle facility. The maintenance date and time 1103 is a field which stores a date and a time of the execution of the maintenance. In the maintenance date and time 1103, the date and the time of the execution of the latest maintenance are stored. The maintenance deadline 1104 is a field which stores a date and a time being an execution deadline of the maintenance.

The maintenance deadline information 139 may be set in advance, or may be acquired from the outside.

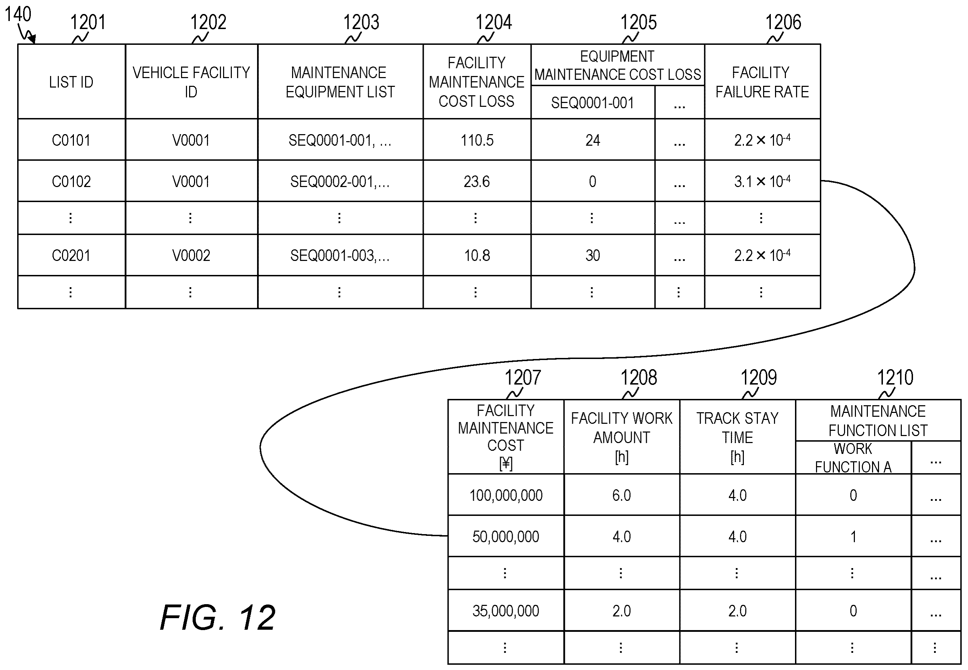

FIG. 12 is a table for showing an example of a data structure of the maintenance equipment list information 140 in the first embodiment.

The maintenance equipment list information 140 is information for managing a list of pieces of equipment to be maintained, which is generated by the maintenance planning assistance system 100. A plurality of maintenance equipment lists are generated for one vehicle facility in some cases.

The maintenance equipment list information 140 stores entries each including a list ID 1201, a vehicle facility ID 1202, a maintenance equipment list 1203, a facility maintenance cost loss 1204, an equipment maintenance cost loss 1205, a facility failure rate 1206, a facility maintenance cost 1207, a facility work amount 1208, a track stay time 1209, and a maintenance function list 1210. One entry exists for a combination of the vehicle facility and the maintenance equipment list. The fields contained in one entry are an example, and the fields are not limited to this example. Any one of the above-mentioned fields may not be included, or another field may be included.

The list ID 1201 is a field which stores an ID of the maintenance equipment list. The vehicle facility ID 1202 is the same field as the vehicle facility ID 501. The maintenance equipment list 1203 is a field which stores a list of pieces of equipment (maintenance equipment) to be maintained. In the maintenance equipment list 1203, a list of IDs of the pieces of equipment is stored.

The facility maintenance cost loss 1204 is a field which stores a facility maintenance cost loss. Details of the facility maintenance cost loss are described later. The equipment maintenance cost loss 1205 is a field which stores an equipment maintenance cost loss. Details of the equipment maintenance cost loss are described later. The facility failure rate 1206 is a field which stores a failure rate after the maintenance of the vehicle facility.

The facility maintenance cost 1207 is a field which stores a cost in a case where all pieces of maintenance equipment are maintained. The facility work amount 1208 is a field which stores a work amount in a case where all pieces of maintenance equipment are maintained. The track stay time 1209 is a field which stores a stay time on the track in a case where all pieces of maintenance equipment are maintained. The maintenance function list 1210 is a field which stores a list of maintenance functions required in a case where all pieces of maintenance equipment are maintained. In this embodiment, the maintenance function list 1210 includes columns each indicating the function. In each column, any one of "0" indicating that the function is not required or "1" indicating that the function is required is set.

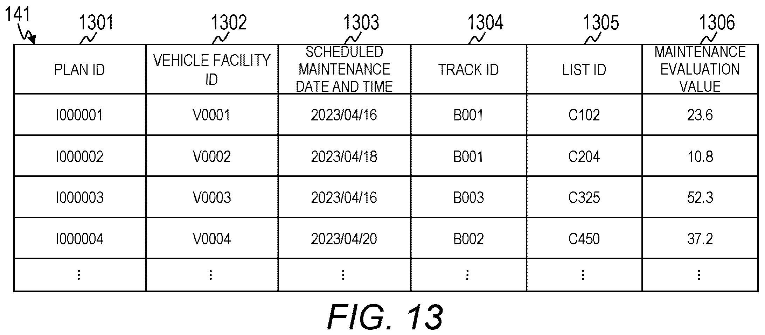

FIG. 13 is a table for showing an example of a data structure of the maintenance plan information 141 in the first embodiment.

The maintenance plan information 141 is information for managing a maintenance plan for the system generated by the maintenance planning assistance system 100. The maintenance plan for the system is formed of maintenance plans for respective vehicle facilities. The maintenance plan information 141 includes a plan ID 1301, a vehicle facility ID 1302, a scheduled maintenance date and time 1303, a track ID 1304, a list ID 1305, and a maintenance evaluation value 1306. One entry exists for one vehicle facility to be maintained. The fields contained in one entry are an example, and the fields are not limited to this example. Any one of the above-mentioned fields may not be included, or another field may be included.

The plan ID 1301 is a field which stores an ID of the maintenance plan of the vehicle facility. The vehicle facility ID 1302 is a field which stores the ID of the vehicle facility to be maintained. The scheduled maintenance date and time 1303 is a field which stores a date and a time at which the maintenance is scheduled to be executed. The track ID 1304 is a field which stores the ID of the track used for the maintenance. The list ID 1305 is a field which stores the ID of the maintenance equipment list. The maintenance evaluation value 1306 is a field which stores a maintenance evaluation value.

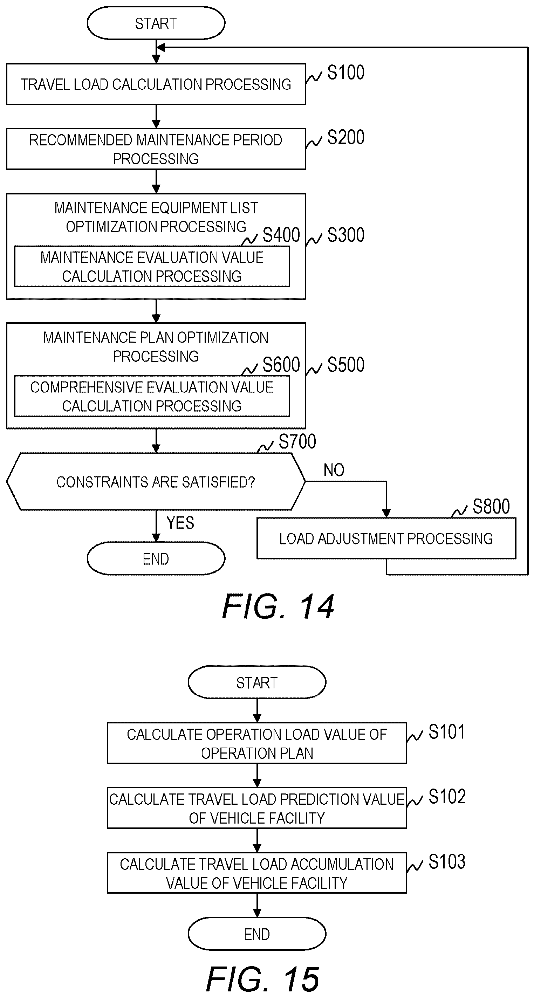

FIG. 14 is a flowchart for illustrating processing executed by the maintenance planning assistance system 100 according to the first embodiment.

When the maintenance planning assistance system 100 receives, for example, information relating to a period (drafting period) for which the maintenance plan is to be generated, the maintenance planning assistance system 100 starts processing described below.

The maintenance equipment list generation module 101 receives information relating to the operation and the state of the deterioration of each of the pieces of equipment forming the vehicle facilities, and generates the maintenance equipment list of each vehicle facility. The maintenance equipment list generation module 101 includes a load calculation module 111, a recommended maintenance period calculation module 112, a maintenance equipment list optimization module 113, and a maintenance evaluation value calculation module 114.

The load calculation module 111 calculates a travel load on the vehicle facility. The recommended maintenance period calculation module 112 calculates a recommended maintenance period of the equipment. The maintenance equipment list optimization module 113 generates the maintenance equipment list of each vehicle facility based on a first maintenance evaluation value calculated by the maintenance evaluation value calculation module 114. The maintenance evaluation value calculation module 114 calculates the maintenance evaluation value for evaluating the maintenance equipment list.

The maintenance plan generation module 102 receives the maintenance equipment list of the vehicle facility and information relating to the constraints relating to the resources, and generates, in consideration of the risk and the cost, the maintenance plan for the vehicle facility which satisfies the constraints relating to the resources. The maintenance plan for the vehicle facility is formed of the vehicle facility, the maintenance date and time, the track, and the maintenance equipment list. The maintenance plan generation module 102 includes a maintenance plan optimization module 121, a comprehensive evaluation value calculation module 122, and an adjustment module 123.

The maintenance plan optimization module 121 generates the maintenance plan for each vehicle facility based on a comprehensive evaluation value calculated by the comprehensive evaluation value calculation module 122. The comprehensive evaluation value calculation module 122 calculates the comprehensive evaluation value for evaluating the maintenance plan. The adjustment module 123 adjusts the operation plan among the vehicle facilities in a case where the maintenance plan for the system which satisfies the constraints cannot be generated.

First, description is given of the outline of processing executed by the maintenance planning assistance system 100. It is assumed that information relating to the maintenance time being a period in which the maintenance is to be executed is set in the maintenance planning assistance system 100. It is assumed that the maintenance time is set at a certain time interval.

The load calculation module 111 executes travel load calculation processing (Step S100). After that, the recommended maintenance period calculation module 112 executes recommended maintenance period calculation processing (Step S200). After that, the maintenance equipment list optimization module 113 executes maintenance equipment list optimization processing (Step S300). In the maintenance equipment list optimization processing, maintenance evaluation value calculation processing is executed by the maintenance evaluation value calculation module 114 (Step S400).

After that, the maintenance plan optimization module 121 executes maintenance plan optimization processing (Step S500). In the maintenance plan optimization processing, comprehensive evaluation value calculation processing is executed by the comprehensive evaluation value calculation module 122 (Step S600).

The maintenance plan optimization module 121 determines whether or not constraints are satisfied (Step S700).

When the constraints are satisfied, the maintenance planning assistance system 100 finishes a series of steps of processing.

When the constraints are not satisfied, the adjustment module 123 executes adjustment processing (Step S800). After that, the maintenance planning assistance system 100 returns the process to Step S100, and executes similar processing.

Description is now given of details of each step of processing executed by the maintenance planning assistance system 100.

FIG. 15 is a flowchart for illustrating the travel load calculation processing executed by the maintenance planning assistance system 100 according to the first embodiment.

The load calculation module 111 calculates the operation load value of each operation plan based on the railway state, the operation method, and the like (Step S101). Specifically, the following processing is executed.

(S101-1) The load calculation module 111 selects one operation plan (entry) from the service operation information 131. The load calculation module 111 acquires the value of the number of round trips 305 of the operation plan.

(S101-2) The load calculation module 111 refers to the railway state information 132, to thereby search for an entry having a value of the railway section ID 401 matching the value of the railway section ID 304 of the selected operation plan. The load calculation module 111 acquires the values of the section distance 403 and the deterioration coefficient 406 of the retrieved entry.

(S101-3) The load calculation module 111 calculates, as the operation load value, a value obtained by multiplying the number of round trips, the section distance, and the deterioration coefficient by one another. The load calculation module 111 sets the calculated value as the operation load value 307 of the operation plan.

(S101-4) The load calculation module 111 determines whether or not the processing has been completed for all of the operation plans. When the processing has not been completed for all of the operation plans, the load calculation module 111 returns the process to S101-1. When the processing has been completed for all of the operation plans, the load calculation module 111 finishes the processing step of Step S101.

After that, the load calculation module 111 calculates the travel load prediction value of each vehicle facility (Step S102). Specifically, the following processing is executed.

(S102-1) The load calculation module 111 selects one vehicle facility (entry) from the vehicle facility operation information 133. The load calculation module 111 acquires the operation plans in the period from the current time to the end date and time of the drafting period from the operation plan 503 of the entry.

(S102-2) The load calculation module 111 refers to the service operation information 131 based on the ID of the operation plan, to thereby acquire the value of the operation load value 307 of a corresponding entry.

(S102-3) The load calculation module 111 calculates, as the travel load expected value, the total of the operation load values of the respective operation plans. The load calculation module 111 refers to the equipment state information 134, to thereby set the calculated value as the travel load prediction value 607 of all of the entries having the ID of the selected vehicle facility stored in the vehicle facility ID 602.

(S102-4) The load calculation module 111 determines whether or not the processing has been completed for all of the vehicle facilities. When the processing has not been completed for all of the vehicle facilities, the load calculation module 111 returns the process to S102-1. When the processing has been completed for all of the vehicle facilities, the load calculation module 111 finishes the processing step of Step S102.

After that, the load calculation module 111 calculates the travel load accumulation value of the equipment for each vehicle facility (Step S103). Then, the load calculation module 111 finishes the travel load calculation processing. Specifically, the following processing is executed.

(S103-1) The load calculation module 111 selects one vehicle facility (entry) from the vehicle facility operation information 133.

(S103-2) The load calculation module 111 refers to the equipment state information 134, to thereby search for entries storing the ID of the selected vehicle facility in the vehicle facility ID 602, and generates a list of the IDs of the entries.

(S103-3) The load calculation module 111 selects one entry (equipment) from the list.

(S103-4) The load calculation module 111 calculates an operation period of the equipment. Here, a period from the date and the time stored in the use start date and time 603 to the current date and time is calculated as the operation period.

(S103-5) The load calculation module 111 refers to the operation plan 503 of the entry, to thereby identify the operation plans which have been executed in the operation period. The load calculation module 111 calculates, as the travel load accumulation value, the total value of the operation load values of the identified operation plans. The load calculation module 111 sets the calculated value as the travel load accumulation value 606 of the entry of the equipment.

(S103-6) The load calculation module 111 determines whether or not the processing has been completed for all of the entries of the list. When the processing has not been completed for all of the entries of the list, the load calculation module 111 returns the process to S103-3.

(S103-7) When the processing has been completed for all of the entries of the list, the load calculation module 111 determines whether or not the processing has been completed for all of the vehicle facilities. When the processing has not been completed for all of the vehicle facilities, the load calculation module 111 returns the process to S103-1. When the processing has been completed for all of the vehicle facilities, the load calculation module 111 finishes the processing step of Step S103.

As described above, the load calculation module 111 can calculate the accumulation value and the prediction value of the travel load of the equipment which forms the vehicle facility, based on the railway state and the operation plan.

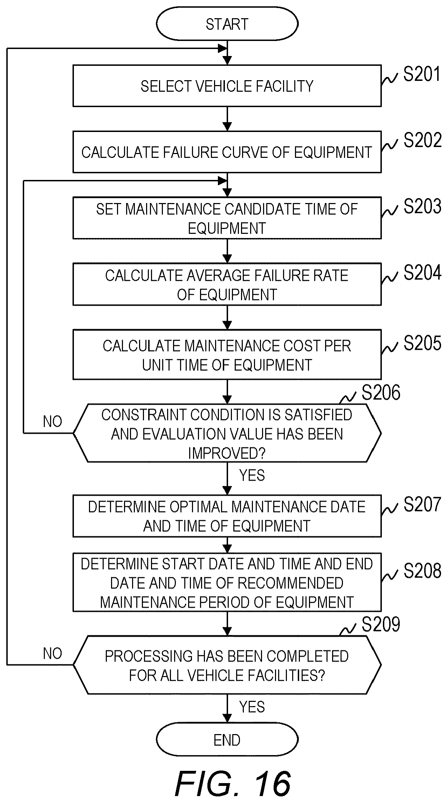

FIG. 16 is a flowchart for illustrating the recommended maintenance period calculation processing executed by the maintenance planning assistance system 100 according to the first embodiment.

The recommended maintenance period calculation module 112 selects one vehicle facility (entry) from the vehicle facility operation information 133 (Step S201).

The recommended maintenance period calculation module 112 calculates a failure curve of the equipment of the selected vehicle facility (Step S202). Here, it is assumed that a distribution of the failure rate of the equipment follows the Weibull distribution. The distribution of the failure rate may follow a statistic distribution other than the Weibull distribution. Description is now given of details of Step S202.

(S202-1) The recommended maintenance period calculation module 112 refers to the equipment state information 134, to thereby search for entries each storing the ID of the selected vehicle facility in the vehicle facility ID 602, to thereby generate a list of the IDs of the entries.

(S202-2) The recommended maintenance period calculation module 112 selects one entry (equipment) from the list.

(S202-3) The recommended maintenance period calculation module 112 refers to the equipment specification information 135, to thereby acquire parameters $m$ and $\eta$ from the service life parameter 704 of an entry corresponding to the selected equipment, and assigns those parameters to Expression (1), to thereby calculate the failure rate curve.

$$\lambda_i\big(D(t)\big) = \frac{m_i}{\eta_i^{m_i}} \big(D(t)\big)^{m_i-1} \; ... (1)$$

In Expression (1), *i* represents an identification number of the equipment, and *m_i* and $\eta\_i$ represent the service life parameters of the equipment *i*. *D(t)* represents the travel load accumulation value at an operation time *t*, and $\lambda\_i$ represents the failure rate of the equipment *i*. As given by Expression (1), the failure curve is calculated with respect to the travel load value. When the failure rate of the equipment is calculated, the values of the travel load accumulation value 606 and the travel load prediction value 607 of the equipment state information 134 are acquired, and *D(t)* is calculated in accordance with Expression (2).

$$D(t) = \begin{cases} \dfrac{t}{t_{now}} * D_{now}; \ if \ t \leqq t_{now} \\ D_{now} + \dfrac{(t - t_{now})}{T_{insp}} * D_{fut}; \ if \ t > t_{now} \end{cases} \quad \dots (2)$$

In Expression (2), *t_now* represents the operation time (constant) indicating a period from the operation start date and time of the equipment to the current date and time, *D_now* represents the travel load accumulation value, *D_fut* represents the travel load prediction value, and *T_insp* represents the drafting period.

Expression (2) is an expression which calculates an increase amount of the travel load up to the current time from the travel load accumulation value, and calculates prediction of a subsequent increase amount of the travel load from the travel load prediction value. With the calculation of the travel load on the equipment by using Expression (2), the failure curve of each piece of equipment can be calculated through use of Expression (1).

(S202-4) The recommended maintenance period calculation module 112 determines whether or not the processing has been completed for all of the entries of the list. When the processing has not been completed for all of the entries of the list, the recommended maintenance period calculation module 112 returns the process to S202-2. When the processing has been completed for all of the entries of the list, the recommended maintenance period calculation module 112 finishes the processing step of Step S202.

After that, the recommended maintenance period calculation module 112 sets a maintenance candidate time of each piece of equipment (Step S203). Specifically, the recommended maintenance period calculation module 112 sets a set of binary variables *x_ij* as information indicating the maintenance candidate time of the equipment. The binary variable *x_ij* is a variable which is "1" in a case where the equipment *i* is maintained in a maintenance period *j,* and is "0" in a case where the equipment *i* is not maintained in the maintenance period *j*. The maintenance candidate time for the first time may randomly be set, or may be set in accordance with any appropriate rule.

The recommended maintenance period calculation module 112 calculates, for each piece of equipment, an average failure rate of the equipment in a case where the maintenance of the equipment is executed at the maintenance candidate time (Step S204). Here, the average failure rate indicates an average of the failure rates of the equipment from the operation start to the end. From the average failure rate of the equipment, an average of a risk can be estimated.

Specifically, the recommended maintenance period calculation module 112 uses Expression (3) to calculate the average failure rate of the equipment.

$$\lambda_i\_ave\left(T_{ij}\right) = \frac{1}{T_{ij}} \int \lambda_i\big(D(t)\big)dt \ \dots (3)$$

In Expression (3), *T_ij* represents an operation time in a case where the equipment *i* is maintained at the maintenance time *j,* and $\lambda\_i\_ave(T\_ij)$ represents the average failure rate. The operation time *T_ij* is calculated as a time width between a use start date and time of the equipment *i* and a start date and time of the maintenance period *j*.

In Expression (3), the average failure rate is calculated while a distribution of the number of years of operation of the equipment is expected to be a stationary distribution from the operation start to end. In Expression (3), the failure of the equipment during the operation is not expected, and it is assumed that a distribution of the time in which the equipment is used, that is, the distribution of the number of years of operation is a stationary distribution up to the operation time. There actually exists a case in which the equipment fails during the operation, and hence the average failure rate can be calculated in consideration of such a fact that the distribution of the number of years of operation is not the stationary distribution. However, in a case where the failure rate of the equipment is sufficiently low, the change in the distribution of the number of years of operation of the equipment due to the failure during the operation is negligible, and hence the distribution of the number of years of operation can be approximated as Expression (3).

The recommended maintenance period calculation module 112 calculates the maintenance cost per unit time for each piece of equipment (Step S205). Here, the unit time is assumed to be one year. Specifically, the recommended maintenance period calculation module 112 uses Expression (4) to calculate the maintenance cost per unit time.

$$AC_{Rep,i}(T_{ij}) = \frac{C_{Rep,i}}{T_{ij}} \ \dots (4)$$

In Expression (4), *C_Rep, i* represents the maintenance cost for the equipment *i*. In Expression (4), a work cost incurred in the maintenance and a cost incurred by the failure of the equipment in the operation period are not considered. The maintenance cost can be calculated in consideration of those factors, but can be approximated as given by Expression (4) in a case where the failure rate of the equipment is sufficiently low and the work cost is sufficiently low compared with the maintenance cost of the equipment.

The recommended maintenance period calculation module 112 determines whether or not a sum of the average failure rates of the pieces of equipment is smaller than a threshold value (constraint condition) and the evaluation value calculated by using Expression (5) has sufficiently been improved (Step S206). In the processing executed for the first time, it is assumed that the recommended maintenance period calculation module 112 does not execute the processing step of Step S206, and returns the process to Step S203.

$$\sum_{i,j} AC_{Rep,i}(T_{ij}) * x_{ij} \ \dots (5)$$

Regarding the evaluation of the evaluation value, in a case where the evaluation value is smaller than a threshold value and the evaluation value has not changed for a certain period, it is determined that the evaluation value has been sufficiently improved.

When the constraint condition is not satisfied, or the evaluation value has not been improved, the recommended maintenance period calculation module 112 returns the process to Step S203. In Step S203, the recommended maintenance period calculation module 112 sets a maintenance candidate time ($x\_ij$) such that the evaluation value calculated by using Expression (5) decreases under constraint conditions given by Expression (6) and Expression (7).

$$\sum_{j} x_{ij} = 1 \ \dots (6)$$

$$\sum_{i} \lambda_{i\_}ave(T_i) \leqq \Lambda_{st} \ \dots (7)$$

In Expression (7), *Λ_st* is an upper limit value of an average failure rate allowed for the entire facility. The upper limit value can be set to any appropriate value.

When the constraint condition is satisfied and the evaluation value has sufficiently been improved, the recommended maintenance period calculation module 112 determines the optimal maintenance date and time of each piece of equipment (Step S207). Specifically, the recommended maintenance period calculation module 112 determines a start date and time of the maintenance candidate time as the optimal maintenance date and time. The recommended maintenance period calculation module 112 sets the determined optimal maintenance date and time as the optimal maintenance date and time 608 of the equipment state information 134. A series of processing steps from Step S203 to Step S207 can be implemented by solving a linear optimization problem of searching for a maintenance candidate time *x_ij* which gives the minimum evaluation value calculated by using Expression (5).

The recommended maintenance period calculation module 112 determines a start date and time and an end date and time of the recommended maintenance period of each piece of equipment (Step S208).

Specifically, the recommended maintenance period calculation module 112 uses the failure curve of the equipment to obtain an operation period which is a constant number multiple (for example, 0.9 times at a lower limit of an allowable width of the recommended maintenance period) of the failure rate at the optimal maintenance date and time, and calculates the start date and time of the recommended maintenance period based thereon. Moreover, the recommended maintenance period calculation module 112 uses the failure curve of the equipment to obtain an operation period which is a constant number multiple (for example, 1.1 times at an upper limit of the allowable width of the recommended maintenance period) of the failure rate at the optimal maintenance date and time, and calculates the end date and time of the recommended maintenance period based thereon. The recommended maintenance period calculation module 112 sets the calculated dates and times as the start date and time 609 and the end date and time 610 of the equipment state information 134.

An allowable reliability level may be given to the failure rate of the equipment, an operation time at which the reliability level is not satisfied may be obtained based on the failure curve of the equipment, and the end date and time of the recommended maintenance period of the equipment may be calculated based thereon.

The recommended maintenance period calculation module 112 determines whether or not the processing has been completed for all of the vehicle facilities (Step S209).

When the processing has not been completed for all of the vehicle facilities, the recommended maintenance period calculation module 112 returns the process to Step S201. When the processing has been completed for all of the vehicle facilities, the recommended maintenance period calculation module 112 finishes the recommended maintenance period calculation processing.

The recommended maintenance period determined through the above-mentioned processing is a period in which the maintenance cost (cost) and the failure rate (risk) are balanced. Thus, in a case where the equipment is maintained in the recommended maintenance period, the maintenance cost and the failure rate can be suppressed to low levels. Meanwhile, in a case where the equipment is maintained outside the recommended maintenance period, any one of the maintenance cost and the failure rate becomes higher.

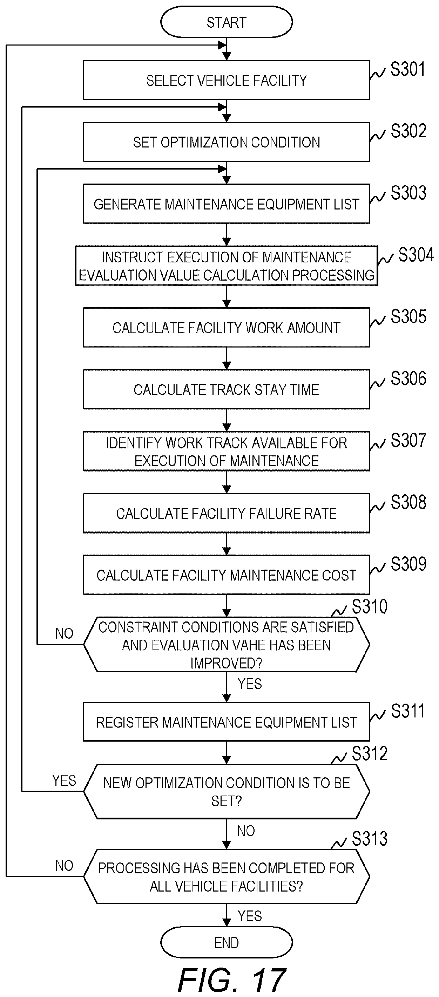

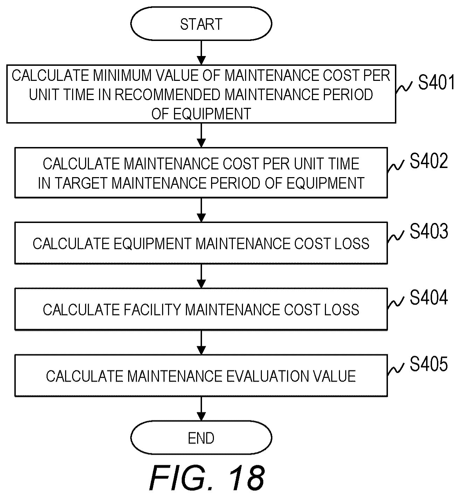

FIG. 17 is a flowchart for illustrating optimization processing for the maintenance equipment list executed by the maintenance planning assistance system 100 according to the first embodiment. FIG. 18 is a flowchart for illustrating the maintenance evaluation value calculation processing executed by the maintenance planning assistance system 100 according to the first embodiment.

The maintenance equipment list optimization module 113 executes processing described below for the maintenance period closest to the current date and time. The closest maintenance period is hereinafter referred to as "target maintenance period."

The maintenance equipment list optimization module 113 selects one vehicle facility (entry) from the vehicle facility operation information 133 (Step S301).

The maintenance equipment list optimization module 113 sets an optimization condition (Step S302). The optimization condition is a constraint condition to be used for the optimization problem described later. In a case of a linear optimization problem, constraint conditions on the available track and the failure rate of the vehicle facility are set. In a case of a heuristic optimization problem such as the genetic algorithm, constraint conditions on the available track, the failure rate of the vehicle facility, a work amount, and the stay time on the track are set. In this embodiment, the linear optimization problem is described as an example.

The maintenance equipment list optimization module 113 generates a maintenance equipment list of the selected vehicle facility (Step S303). Specifically, the maintenance equipment list optimization module 113 generates a set of binary variables $x\_i$ as a maintenance equipment list of the vehicle facility. The binary variable $x\_i$ is a variable which is "1" in a case where the equipment $i$ is to be maintained, and is "0" in a case where the equipment $i$ is not to be maintained.

When the number of pieces of equipment forming the vehicle facility is large, the number of combinations of the binary variables $x\_i$ is very large. Thus, in this embodiment, only pieces of the equipment each having the recommended maintenance period overlapping the target maintenance period are considered. As a result, the number of combinations of the binary variables $x\_i$ can be suppressed. When the current date and time have not reached the start date and time 609, $x\_i$ is set to "0", and in a case where the current date and time have passed the end date and time 610, $x\_i$ is set to "1".

The maintenance equipment list of the vehicle facility for the first time is, for example, randomly set in accordance with the above-mentioned rule.

The maintenance equipment list optimization module 113 instructs the maintenance evaluation value calculation module 114 to execute maintenance evaluation value calculation processing (Step S304). At this time, the maintenance equipment list optimization module 113 inputs the maintenance equipment list to the maintenance evaluation value calculation module 114. Now, with reference to FIG. 18, description is given of the maintenance evaluation value calculation processing.

The maintenance evaluation value calculation module 114 calculates the minimum value of the maintenance cost per unit time in the recommended maintenance period for each piece of equipment (Step S401). The value calculated in Step S401 is defined as the minimum cost. The maintenance cost for the equipment $i$ per unit time can be calculated by using Expression (8) having the same form as in Expression (4).

$$AC_{Rep,i}(T_i) = \frac{C_{Rep,i}}{T_i} \;\; \dots (8)$$

In Expression (8), $T\_i$ represents an operation time in a case where the equipment $i$ is maintained at any date and time in the recommended maintenance period. $T\_i$ is a variable which changes in accordance with the maintenance date and time. The maintenance date and time are changed within the recommended maintenance period. The recommended maintenance period of the equipment can be calculated based on the start date and time 609 and the end date and time 610 of the equipment state information 134.

After that, the maintenance evaluation value calculation module 114 calculates, for each piece of equipment, the maintenance cost per unit time in a case where the maintenance is executed in the target maintenance period (Step S402). The cost calculated in Step S402 is defined as a comparison cost. The maintenance cost per unit time can be calculated by using Expression (8). $T\_i$ is a time (constant) from the operation start date and time to the start date and time of the target maintenance period.

After that, the maintenance evaluation value calculation module 114 calculates, as the equipment maintenance cost loss, a difference between the comparison cost and the minimum cost for each piece of equipment (Step S403). The equipment maintenance cost loss is calculated by using Expression (9).

$$\Delta AC_{Rep,i} = AC_{Rep\text{-}now,i} - AC_{Rep\text{-}min,i} \quad \dots (9)$$

In Expression (9), $AC\_(Rep\text{-}now, i)$ represents the comparison cost, and $AC\_(Rep\text{-}min, i)$ represents the minimum cost. Moreover, $\Delta AC\_(Rep, i)$ represents the equipment maintenance cost loss.

In this embodiment, a cost loss caused by a deviation between the recommended maintenance period and the target maintenance period is calculated as a difference of the maintenance cost in the unit time value. The maintenance cost in the unit time value is a value dependent on the maintenance period, and the maintenance costs in different maintenance periods can be compared with each other.

After that, the maintenance evaluation value calculation module 114 calculates, as the facility maintenance cost loss, a total of the equipment maintenance cost losses of the pieces of equipment (Step S404). The facility maintenance cost loss is calculated by using Expression (10).

$$\Delta AC_{Rep} = \sum_{i} \left\{ \Delta AC_{Rep,i} * x_i \right\} \quad \dots (10)$$

In Expression (10), $\Delta AC\_Rep$ represents the facility maintenance cost loss.

After that, the maintenance evaluation value calculation module 114 uses the facility maintenance cost loss to calculate the maintenance evaluation value (Step S405). In the first embodiment, the facility maintenance cost loss is calculated as the maintenance evaluation value. Here, the maintenance evaluation value is represented as $\Delta AC\_Vehi.$

Each of the minimum cost and the comparison cost is the maintenance cost per unit time, and is a value independent of the length of the maintenance period, and the minimum cost and the comparison cost are the same as each other in scale. Thus, the equipment maintenance cost loss can be used as an index for estimating an economic loss in a case where the date and time at which each piece of equipment is maintained are deviated from the recommended maintenance period. In this embodiment, priority of the maintenance of the equipment can be determined by determining the equipment to be maintained so that the number of pieces of equipment to be maintained in the recommended maintenance period is large, that is, the maintenance evaluation value is small.

The maintenance evaluation value calculation module 114 outputs the maintenance evaluation value to the maintenance equipment list optimization module 113, and finishes the maintenance evaluation value calculation processing.

Description returns to FIG. 17. The maintenance equipment list optimization module 113 calculates the facility work amount required for the maintenance (Step S305). Specifically, the following processing is executed.

(S305-1) The maintenance equipment list optimization module 113 refers to the equipment specification information 135, to thereby acquire the maintenance work list 706 of the entries corresponding to all pieces of equipment of the vehicle facility. The maintenance equipment list optimization module 113 defines the maintenance work $j$ executed in the equipment $i,$ as given by Expression (11). $u\_j$ is a binary variable which is "1" in a case where the maintenance work $j$ is to be executed, and is "0" in a case where the maintenance work $j$ is not to be executed.

$$u_j = u_{ij} * x_i \quad \dots (11)$$

In Expression (11), $u\_ij$ represents a value of the maintenance work $j$ in the maintenance work list 706 of the entry corresponding to the equipment $i$.

(S305-2) The maintenance equipment list optimization module 113 calculates, as the facility work amount, a total of the work amounts of the maintenance work for the pieces of equipment of the vehicle facility. Specifically, Expression (12) is used to calculate the facility work amount.

$$W_{Vehi} = \sum_{j}\{w_j * u_j\} \ ...(12)$$

In Expression (12), $W\_Vehi$ represents the facility work amount, and $w\_j$ represents the work amount of the maintenance work $j$. The work amount of the maintenance work $j$ is a value acquired from the work amount 803 of the maintenance work information 136.

After that, the maintenance equipment list optimization module 113 calculates the track stay time in a case where the maintenance is to be executed (Step S306). Specifically, the following processing is executed.

(S306-1) The maintenance equipment list optimization module 113 defines the maintenance work $j$ executed in the equipment $i$ as given by Expression (11).

(S306-2) The maintenance equipment list optimization module 113 calculates the track stay time based on the work amount of the maintenance work $j$. For maintenance work groups executed in parallel, it is only required to calculate the largest work amount among the work amounts of the relevant pieces of maintenance work as the work amount of the maintenance work groups. Thus, the track stay time can be calculated as a total of the work amounts of the maintenance work groups as given by Expression (13).

$$R_{Vehi} = \sum_{k}\left\{\max_{j\in U_k}(w_j * u_j)\right\} \ ...(13)$$

In Expression (13), $R\_Vehi$ represents a track stay time, $k$ represents a parallel work ID, and $U\_k$ represents a set of pieces of maintenance work having $k$ as the parallel work ID.

After that, the maintenance equipment list optimization module 113 identifies a work track available for the execution of the maintenance of the vehicle facility (Step S307). Specifically, the following processing is executed.

(S307-1) The maintenance equipment list optimization module 113 refers to the equipment specification information 135, to thereby acquire the maintenance function list 705 of the entries corresponding to all pieces of equipment of the vehicle facility.

(S307-2) The maintenance equipment list optimization module 113 uses Expression (14) to identify the work functions required to maintain the vehicle facility.

$$v_l = \max_{i\in E}(v_{il} * x_i) \ ...(14)$$

In Expression (14), $l$ represents the maintenance function. $v\_il$ represents a value of the function $l$ of the maintenance function list 705 of the equipment $i$. $v\_l$ is a binary variable indicating whether or not the maintenance function $l$ is required. $v\_l$ takes "0" in a case where the maintenance function is not required, and takes "1" in a case where the maintenance function is required. $E$ represents a set of pieces of equipment forming the vehicle facility. The value of Expression (14) is 1 in a case where the maintenance function $l$ is required in at least one piece of equipment.

(S307-3) The maintenance equipment list optimization module 113 refers to the maintenance function list 902 of each entry of the work track information 137, to thereby identify the tracks each having 1 in all of the maintenance functions each having 1 in $v\_l$. The maintenance equipment list optimization module 113 stores a processing result as a set of binary variables $H\_s$. Here, s represents the work track. The binary variable $H\_s$ is a variable which is "1" in a case where the maintenance can be executed on the work track $s$, and is "0" in a case where the maintenance cannot be executed on the work track $s$.

After that, the maintenance equipment list optimization module 113 calculates, as the facility failure rate, a probability of failure of any one of the pieces of equipment forming the vehicle facility (Step S308). Specifically, the following processing is executed.

(S308-1) The maintenance equipment list optimization module 113 uses, for each piece of equipment, Expression (15) to calculate a failure probability $P\_i$ of the equipment in a case where the equipment is not maintained at the maintenance time. Moreover, the maintenance equipment list optimization module 113 uses, for each piece of equipment, Expression (16) to calculate a failure probability $P'\_i$ of the equipment in a case where the equipment is maintained in the maintenance time.

$$P_i = \int_{D_{now}}^{D_{now}+D_{fut}} \lambda_i\big(D(t)\big)\,\mathrm{dD} \ ...(15)$$

$$P_i' = \int_0^{D_{fut}} \lambda_i\big(D(t)\big)\, \mathrm{dD} \quad \dots (16)$$

In Expression (15), *D_now* represents the travel load accumulation value and *D_fut* represents the travel load prediction value. The travel load accumulation value and the travel load prediction value are the values of the travel load accumulation value 606 and the travel load prediction value 607 of the equipment state information 134, respectively. Moreover, the parameters of the failure rate curve are the values of the service life parameter 704 of the equipment specification information 135.

(S308-2) The maintenance equipment list optimization module 113 uses Expression (17) to calculate a facility failure rate *P_Vehi.*

$$P_{Vehi} = 1 - \prod_{i \in E}\{(1 - P_i) * (1 - x_i) \mp (1 - P_i') * x_i\} \quad \dots (17)$$

After that, the maintenance equipment list optimization module 113 calculates a maintenance cost *C_R* for the vehicle facility (Step S309). Specifically, the maintenance equipment list optimization module 113 uses Expression (18) to calculate the maintenance cost for the vehicle facility.

$$C_R = \sum_i C_{Rep,i} * x_i \quad \dots (18)$$

The maintenance equipment list optimization module 113 determines whether or not the constraint conditions are satisfied and the evaluation value *ΔAC_Part* calculated by using Expression (19) has sufficiently been improved (Step S310). In the processing executed for the first time for the equipment *i,* it is assumed that the maintenance equipment list optimization module 113 does not execute the processing step of Step S310, and returns the process to Step S303.

$$\Delta AC_{Part} = \Delta AC_{Vehi} + \alpha * W_{Vehi} \quad \dots (19)$$

In Expression (19), $\alpha$ represents a work amount adjustment coefficient. Moreover, the constraint conditions are given by Expression (20), Expression (21), Expression (22), and Expression (23).

$$H_s \leq H_{s\_st} \quad \dots (20)$$

$$P_{Vehi} \leq P_{Vehi\_st} \quad \dots (21)$$

$$x_i = 0;\ \text{if } t < t_{start,i} \quad \dots (22)$$

$$x_i = 1;\ \text{if } t > t_{end,i} \quad \dots (23)$$

In Expression (20), H_(s_st) represents an upper limit value of workable tracks, *P_(Vehi_st)* represents an upper limit value of the facility failure rate, *t_start, i* represents the start date and time of the recommended maintenance period of the equipment *i,* and *t_end, i* represents the end date and time of the recommended maintenance period of the equipment *i.* *t* represents the start date and time of the maintenance period.

When the constraint conditions are not satisfied, or the evaluation value *ΔAC_Part* has not sufficiently been improved, the maintenance equipment list optimization module 113 returns the process to Step S303. In Step S303, the maintenance equipment list optimization module 113 sets the maintenance equipment list so that the evaluation value *ΔAC_Part* is small under the constraint conditions given by Expression (20), Expression (21), Expression (22), and Expression (23).

The facility work amount included in the evaluation value *ΔAC_Part* is not linear with respect to the maintenance equipment list, but a function defined as a sum of functions including an absolute value or "max" can be expressed as a sum of a linear objective function and a linear constraint condition after the transformation of the expression. In other words, the optimization problem based on the evaluation value $\Delta AC\_Part$ can be expressed as a mixed-integer linear programming problem, and a method such as the branch and bound method can be applied.

The maintenance equipment list may be searched for through use of a heuristic optimization method. In this case, the constraints can be applied to, in addition to the workable track and the facility failure probability, the facility work amount and the track stay time which are not linear with respect to the maintenance equipment list. As the evaluation value, the maintenance evaluation value $\Delta AC\_Vehi$ is used. In other words, the maintenance equipment list which gives the minimum maintenance evaluation value $\Delta AC\_Vehi$ is searched for through use of the recommended maintenance end date and time, the work amount adjustment coefficient, the workable track, the upper limit value of the facility negotiation probability, the upper limit value of the facility work amount, and the upper limit value of the track stay time under the constraint conditions given by Expression (20), Expression (21), Expression (22), Expression (23), Expression (24), and Expression (25).

$$W_{Vehi} \leq W_{Vehi\_st} \ ... \ (24)$$

$$R_{Vehi} \leq R_{Vehi\_st} \ ... \ (25)$$

When the constraint conditions are satisfied and the evaluation value $\Delta AC\_Part$ has sufficiently been improved, the maintenance equipment list optimization module 113 registers the maintenance equipment list in the maintenance equipment list information 140 (Step S311). A series of processing steps from Step S303 to Step S311 can be implemented by solving an optimization problem of searching for a maintenance equipment list $x\_i$ which gives the minimum evaluation value $\Delta AC\_Part$.

After that, the maintenance equipment list optimization module 113 determines whether or not the optimization condition is to newly be set (Step S312). For example, in a case where the number of the generated maintenance equipment list is equal to or larger than a certain number, or in a case where the processing has been executed for all of the optimization conditions which can be set, the maintenance equipment list optimization module 113 does not newly set the optimization condition.

When the optimization condition is to newly be set, the maintenance equipment list optimization module 113 returns the process to Step S302.

When the optimization condition is not to newly be set, the maintenance equipment list optimization module 113 determines whether or not the processing has been executed for all of the vehicle facilities (Step S313).

When the processing has not been executed for all of the vehicle facilities, the maintenance equipment list optimization module 113 returns the process to Step S301. When the processing has been executed for all pieces of equipment, the maintenance equipment list optimization module 113 finishes the optimization processing for the maintenance equipment list.

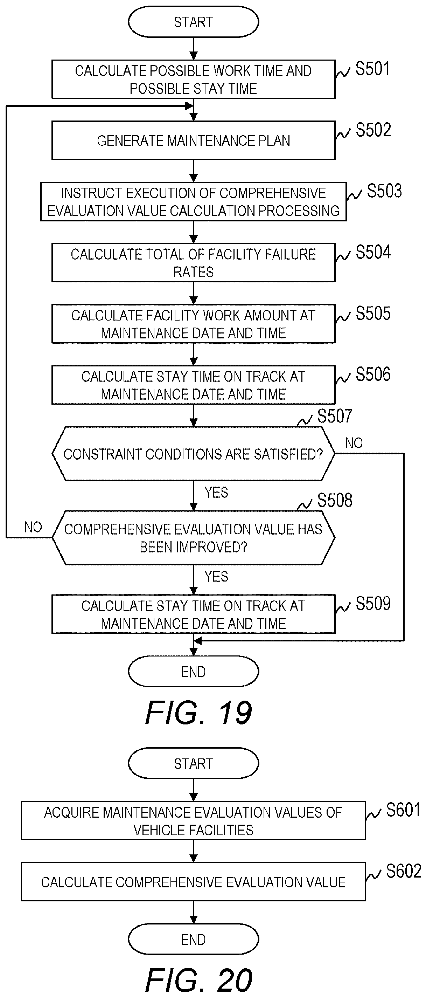

FIG. 19 is a flowchart for illustrating the maintenance plan optimization processing executed by the maintenance planning assistance system 100 according to the first embodiment. FIG. 20 is a flowchart for illustrating the comprehensive evaluation value calculation processing executed by the maintenance planning assistance system 100 according to the first embodiment.

The maintenance plan optimization module 121 executes processing described below for the maintenance period closest to the current date and time (target maintenance period).

The maintenance plan optimization module 121 calculates the possible work time and the possible stay time of the work track for each inspection date and time (Step S501).

The maintenance plan optimization module 121 generates the maintenance plan for the system (Step S502). The maintenance plan for the system is represented as a set of binary variables $y\_pqrs$ (the maintenance plan for the vehicle facility) each indicating whether or not the maintenance is to be executed on the track s at the inspection date and time $r$ in accordance with a maintenance equipment list $q$ for a vehicle facility $p$. Here, it is assumed that the maintenance plan for the system is generated under such a condition that all of the vehicle facilities are maintained only once in the target maintenance period. The inspection date and time indicates the date and time in the target maintenance period.

The maintenance plan optimization module 121 instructs the execution of the comprehensive evaluation value calculation processing by the comprehensive evaluation value calculation module 122 (Step S503). At this time, the maintenance plan optimization module 121 inputs the maintenance plan for the system to the comprehensive evaluation value calculation module 122. Now, with reference to FIG. 20, description is given of the comprehensive evaluation value calculation processing.

The comprehensive evaluation value calculation module 122 refers to the maintenance equipment list information 140, to thereby acquire the maintenance evaluation value $\Delta AC\_Vehi$ for each vehicle facility (Step S601).

The comprehensive evaluation value calculation module 122 uses the maintenance evaluation values $\Delta AC\_Vehi$ to calculate the comprehensive evaluation value (Step S602). Specifically, the comprehensive evaluation value calculation module 122 uses Expression (26) to calculate the comprehensive evaluation value.

$$\Delta AC_{All} = \sum_{p,q,r,s} \left\{ \Delta AC_{Vehi,pq} * y_{pqrs} \right\} \ ...(26)$$

Here, $\Delta AC\_All$ represents the comprehensive evaluation value, and $\Delta AC\_Vehi, pq$ represents a maintenance evaluation value in a case where the facility $p$ is maintained in accordance with the maintenance equipment list q. The maintenance evaluation value is a value of the maintenance evaluation value 1306 of the maintenance plan information 141. In this embodiment, the maintenance equipment list to be executed preferentially for each vehicle facility can be determined by creating the maintenance plan for the system so that the comprehensive evaluation value decreases.

The comprehensive evaluation value calculation module 122 outputs the comprehensive evaluation value to the maintenance plan optimization module 121, and finishes the comprehensive evaluation value calculation processing.

Description returns to FIG. 19. The maintenance plan optimization module 121 calculates a total of the facility failure probabilities in the maintenance plan for the system (Step S504). Specifically, the maintenance plan optimization module 121 uses Expression (27) to calculate the total of the facility failure probabilities in the maintenance plan for the system.

$$P_{All} = \sum_{p,q,r,s} \left\{ P_{Vehi,pq} * y_{pqrs} \right\} \ ...(27)$$

In Expression (27), $P\_All$ represents the total of the vehicle facility failure rates, and $P\_Vehi, pq$ represents a facility failure rate in a case where the facility $p$ is maintained in accordance with the maintenance equipment list q. $P\_Vehi, pq$ is a value of the facility failure rate 1206 of an entry having the vehicle facility ID 1202 and the maintenance equipment list 1203 of the maintenance equipment list information 140 matching the maintenance equipment list q of the facility $p$.

After that, the maintenance plan optimization module 121 calculates a total of the facility work amounts at the maintenance date and time r (Step S505). Specifically, the maintenance plan optimization module 121 uses Expression (28) to calculate the total of the facility work amounts at the maintenance date and time r.

$$W_{All,r} = \sum_{p,q,s} \left\{ W_{Vehi,pq} * y_{pqrs} \right\} \ ...(28)$$

In Expression (28), $W\_(All, r)$ represents the total of the facility work amounts at the maintenance date and time r, and $W\_Vehi, pq$ represents the facility work amount in a case where the facility $p$ is maintained in accordance with the maintenance equipment list $q$. $W\_Vehi, pq$ is a value of the facility work amount 1208 of an entry having the vehicle facility ID 1202 and the maintenance equipment list 1203 of the maintenance equipment list information 140 matching the maintenance equipment list q of the facility $p$.

After that, the maintenance plan optimization module 121 calculates the stay time on the track s for each maintenance date and time (Step S506). Specifically, the maintenance plan optimization module 121 uses Expression (29) to calculate the stay time on the track s at the maintenance date and time r.

$$R_{All,rs} = \sum_{p,q} \left\{ R_{Vehi,pq} * y_{pqrs} \right\} \ ...(29)$$

In Expression (29), $R\_(ALL, rs)$ represents the stay time on the track s at the maintenance date and time r, and $R\_Vehi, pq$ represents the stay time on the track in a case where the facility $p$ is maintained in accordance with the maintenance equipment list $q$. $R\_Vehi, pq$ is a value of the track stay time 1209 of an entry having the vehicle facility ID 1202 and the maintenance equipment list 1203 of the maintenance equipment list information 140 matching the maintenance equipment list q of the facility $p$.

After that, the maintenance plan optimization module 121 determines whether or not the constraint conditions are satisfied (Step S507). In the processing executed for the first time, it is assumed that the maintenance plan optimization module 121 does not execute the processing step of Step S507, and returns the process to Step S502.

Here, the constraint conditions are given by Expression (30), Expression (31), Expression (32), Expression (33), Expression (34), and Expression (35).

$$P_{All} \leq P_{All\_st} \ ... \ (30)$$

$$W_{All,r} \leq W_{All\_st,r} \ ... \ (31)$$

$$\sum_{p,q,r,s} \{H_{pqs} * y_{pqrs}\} = N \ ... \ (32)$$

$$R_{All,rs} \leq R_{All\_st,rs} \ ... \ (33)$$

$$\sum_{q,r,s} y_{pqrs} = 1 \ ... \ (34)$$

$$y_{pqrs}=0; \ \text{if} \ t(r) > t_{deadline,p} \ ... \ (35)$$

In the expressions, $P\_(All\_st)$ represents an upper limit value of the total of the facility failure probabilities, and is set in advance. $W\_(All\_st), r$ represents an upper limit value of the possible work time at the maintenance date and time $r$, and is the possible work time calculated in Step S501. $N$ represents the number of vehicle facilities. $H\_pqs$ is a binary variable indicating whether or not the maintenance of the facility $p$ in accordance with the maintenance equipment list $q$ can be executed on the track s. $H\_pqs$ is a variable which is "1" in a case where the maintenance can be executed, and is "0" in a case where the maintenance cannot be executed. $R\_{(ALL\_st), rs}$ represents an upper limit value of the possible stay time on the work track s at the inspection date and time r, and is the possible stay time calculated in Step S501. $t(r)$ represents a specific date and time of the inspection date and time r. $t\_deadline, p$ represents a maintenance deadline date and time of the vehicle facility, and is a value of the maintenance deadline 1104 of the maintenance deadline information 139.

When the constraint conditions are not satisfied, the maintenance plan optimization module 121 provides such output that the maintenance plan for the system which satisfies the constraint conditions cannot be generated, and finishes the processing.

When the constraint conditions are satisfied, the maintenance plan optimization module 121 determines whether or not the comprehensive evaluation value $\Delta AC\_All$ has sufficiently been improved (Step S508).

When the comprehensive evaluation value $\Delta AC\_All$ has not sufficiently been improved, the maintenance plan optimization module 121 returns the process to Step S502. In Step S502, the maintenance plan optimization module 121 sets the maintenance plan for the system so that the comprehensive evaluation value decreases under the constraint conditions given by Expression (30), Expression (31), Expression (32), Expression (33), Expression (34), and Expression (35).

When the comprehensive evaluation value $\Delta AC\_All$ has sufficiently been improved, the maintenance plan optimization module 121 registers the maintenance plan for the system in the maintenance plan information 141 (Step S509), and then finishes the processing. A series of processing steps from Step S502 to Step S509 can be implemented by solving a linear optimization problem of searching for a maintenance plan $y\_pqrs$ for the system which gives the minimum comprehensive evaluation value.

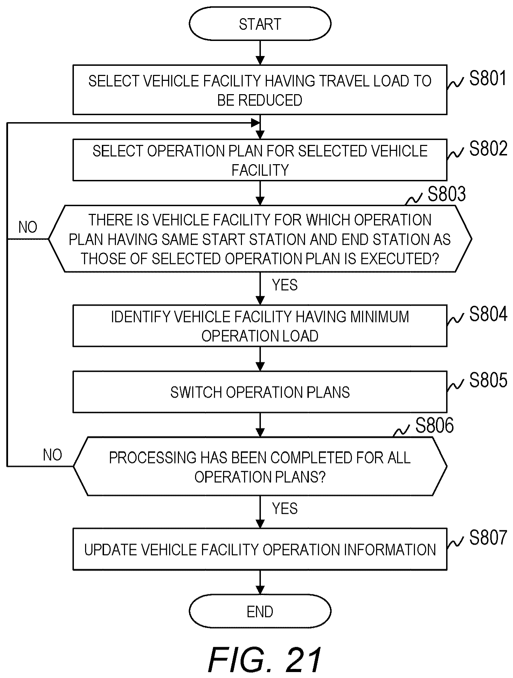

FIG. 21 is a flowchart for illustrating the adjustment processing executed by the maintenance planning assistance system 100 according to the first embodiment.

The adjustment module 123 selects the vehicle facility having the travel load to be reduced (Step S801). Specifically, the following processing is executed.

(S801-1) The adjustment module 123 refers to the vehicle facility operation information 133, to thereby identify the vehicle facilities having "absent" in the load reduction target 502.

(S801-2) The adjustment module 123 selects one vehicle facility from the identified vehicle facilities. For example, the adjustment module 123 selects the vehicle facility oldest in the chronological order of the operation start date and time. This is because a vehicle facility having an older operation start date and time deteriorates earlier for a travel load compared with a vehicle facility having a newer operation start date and time, and hence it is required to reduce the travel load.

After that, the adjustment module 123 refers to the service operation information 131 and the vehicle facility operation information 133, to thereby select one operation plan to be executed by the selected vehicle facility in the maintenance period (Step S802). It is assumed that the operation plan is selected in the order of execution.

After that, the adjustment module 123 determines whether or not there is a vehicle facility for which, in the maintenance period, an operation plan (similar operation plan) having the same combination of the start station and the end station as that of the selected operation plan is executed (Step S803).

When there is no such vehicle facilities, the adjustment module 123 advances the process to Step S806.

When such vehicle facilities exist, the adjustment module 123 identifies a vehicle facility having the smallest operation load value of the similar operation plan from the identified vehicle facilities (Step S804). The operation load value can be acquired from the operation load value 307 of the service operation information 131.

After that, the adjustment module 123 swaps the selected operation plan of the selected vehicle facility and the similar operation plan of the identified vehicle facility with each other (Step S805). Specifically, the operation plan 503 of the vehicle facility operation information 133 is updated.

After that, the adjustment module 123 determines whether or not the processing has been completed for all of the operation plans to be executed by the selected vehicle facility in the maintenance period (Step S806).

When the processing has not been executed for all of the operation plans to be executed by the selected vehicle facility in the maintenance period, the adjustment module 123 returns the process to Step S802.

When the processing has been executed for all of the operation plans to be executed by the selected vehicle facility in the maintenance period, the adjustment module 123 refers to the vehicle facility operation information 133, updates the load reduction target 502 of the entry corresponding to the selected vehicle facility to "present" (Step S807), and then finishes the processing.

The travel load of the selected vehicle facility is reduced, and hence the cost for the maintenance of the vehicle facility in the entire system decreases. Moreover, the failure curve of the equipment also changes.

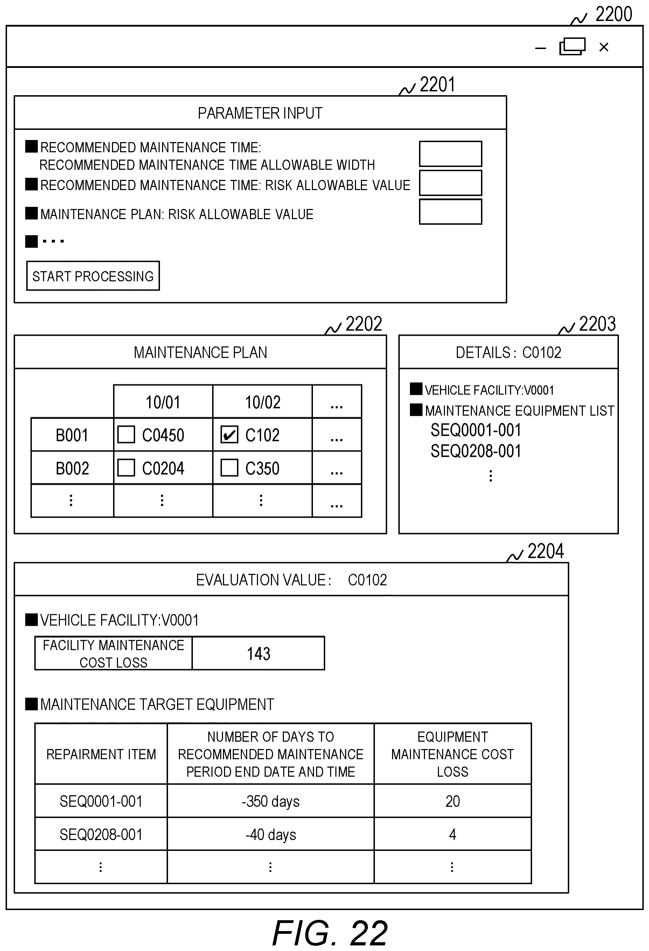

FIG. 22 is a view for illustrating an example of a screen presented by the maintenance planning assistance system 100 according to the first embodiment.

A screen 2200 includes a parameter input field 2201, a maintenance plan output field 2202, a maintenance equipment list output field 2203, and an evaluation value output field 2204.

The administrator of the maintenance work sets the parameters in the parameter input field 2201, and instructs start of the processing. The maintenance planning assistance system 100 executes various types of processing, and outputs processing results to the maintenance plan output field 2202, the maintenance equipment list output field 2203, and the evaluation value output field 2204.

The parameter input field 2201 is a field for setting parameters required for the drafting of the maintenance plan. The parameters are, for example, an average failure rate $\Lambda\_st$ of the entire facility set as a risk allowable value, an allowable width of the recommended maintenance period, a legal maintenance cycle, and an allowable value $P\_All\_st$ of the failure probability of all of the facilities.

The maintenance plan output field 2202 is a field for displaying the maintenance plan for the system. In this embodiment, the maintenance plan for the system is displayed as a matrix having the inspection date and time as a row and the work track as a column. As an element of the matrix, the ID of the maintenance equipment list is stored. In the maintenance plan output field 2202, checkboxes for selecting the maintenance plan for the vehicle facility for which the maintenance equipment list is to be displayed are provided.

The maintenance equipment list output field 2203 is a field which displays the maintenance equipment list of the maintenance plan for the vehicle facility selected in the maintenance plan output field 2202. The facility maintenance cost and the like may be displayed in the maintenance equipment list output field 2203.

The evaluation value output field 2204 is a field which displays the evaluation value of the maintenance plan for the vehicle facility selected in the maintenance plan output field 2202. In the evaluation value output field 2204, for example, the maintenance evaluation value and the comprehensive evaluation value are displayed. Moreover, in the evaluation value output field 2204, the number of days to the end date and time of the recommended maintenance period of the equipment to be maintained may be displayed. This number of days is the number of days from the end date and time of the recommended maintenance period to the scheduled maintenance date and time of the vehicle facility.

According to the first embodiment, it is possible to generate the maintenance plan for the system which satisfies the constraint conditions and gives the minimum cost required for the maintenance. Through use of the loss of the maintenance cost caused by the deviation between the recommended maintenance period and the maintenance period, it is possible to create the maintenance plan for the system executing the maintenance at an appropriate maintenance time from a medium- to long-term viewpoint.

[Second Embodiment]

A second embodiment of this invention is different from the first embodiment in that a reduction effect of the maintenance cost in a case in which a plurality of pieces of equipment are simultaneously maintained is considered. Moreover, in the second embodiment, the maintenance plan for the system is drafted such that the inspection interval for the vehicle facility is as long as possible within a range of the legal maintenance cycle. Description is now given of the second embodiment while focusing on the difference from the first embodiment.

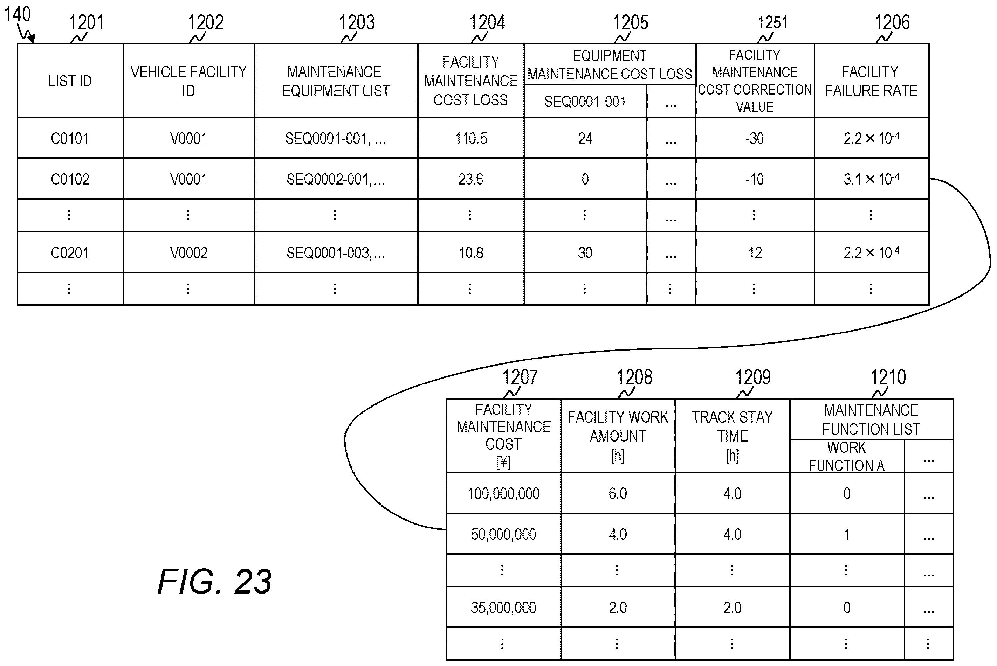

The configuration of a maintenance planning assistance system 100 according to the second embodiment is the same as that in the first embodiment. The second embodiment is different in the calculation method for the maintenance evaluation value and the comprehensive evaluation value. The second embodiment is different in the maintenance equipment list information 140 from the first embodiment. FIG. 23 is a table for showing an example of a data structure of the maintenance equipment list information 140 in the second embodiment.

In the second embodiment, the maintenance equipment list information 140 newly includes a facility maintenance cost correction value 1251.

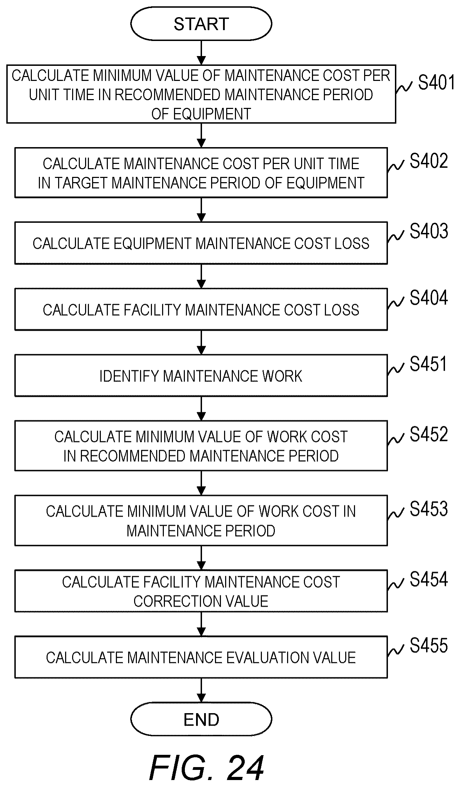

FIG. 24 is a flowchart for illustrating the maintenance evaluation value calculation processing executed by the maintenance planning assistance system 100 according to the second embodiment.

In the first embodiment, in order to generate the maintenance plan for the vehicle facility having the equipment to be maintained in the recommended maintenance period, the facility maintenance cost loss $\Delta AC\_Rep$ is used to calculate the maintenance evaluation value. In the second embodiment, the facility maintenance cost correction value is introduced which evaluates the reduction effect of the maintenance cost in a case where a plurality of pieces of equipment are simultaneously maintained at the maintenance time. Further, the facility maintenance cost loss and the facility maintenance cost correction value are used to calculate the maintenance evaluation value.

Processing steps from Step S401 to Step S404 are the same as in the first embodiment. After the processing step of S404, the maintenance evaluation value calculation module 114 identifies the maintenance work to be executed on the equipment in the maintenance equipment list (Step S451). Specifically, the maintenance evaluation value calculation module 114 refers to the equipment specification information 135, to thereby acquire the maintenance work list 706 of the entries corresponding to the equipment to be maintained. The maintenance evaluation value calculation module 114 indicates the maintenance work to be executed as a set of binary values $u\_j$. The binary variable $u\_j$ is a variable which is "1" in a case where the maintenance work $j$ is to be executed, and is "0" in a case where the maintenance work $j$ is not to be executed.

The maintenance evaluation value calculation module 114 calculates the minimum value of the work cost per unit time in a case where the maintenance work for the maintenance equipment is executed in the recommended maintenance period (Step S452). The value calculated in Step S452 is defined as a second minimum cost. Specifically, the following processing is executed.

(S452-1) The maintenance evaluation value calculation module 114 refers to the maintenance work information 136, to thereby acquire the value of the work cost 805 of an entry corresponding to the maintenance work to be executed.

(S452-2) The maintenance evaluation value calculation module 114 uses Expression (36) to calculate, for each piece of equipment, the minimum value of the work cost per unit time in a case where the maintenance work $j$ for the equipment $i$ is executed in the recommended maintenance period.

$$AC_{Work,j}(T_i) = \frac{C_{Work,j}}{T_i} \; ... \, (36)$$

In Expression (36), $T\_i$ represents an operation time in a case where the equipment $i$ is maintained at any date and time in the recommended maintenance period. $T\_i$ is a variable which changes in accordance with the maintenance date and time. The maintenance date and time are changed within the recommended maintenance period. The recommended maintenance period of the equipment can be calculated based on the start date and time 609 and the end date and time 610 of the equipment state information 134. $C\_(Work, j)$ represents a work cost of the maintenance work $j$.

(S452-3) The maintenance evaluation value calculation module 114 uses Expression (37) to calculate a work cost per unit time in a case where the equipment $i$ is maintained in the recommended maintenance period.

$$AC_{Work,i} = \sum_{j}\left\{AC_{Work-idel,j} * u_j\right\} \; ... \, (37)$$

In Expression (37), $AC\_(Work-ideal, j)$ is the minimum value calculated in S406-2.

(S452-4) The maintenance evaluation value calculation module 114 uses Expression (38) to calculate the second minimum cost.

$$AC_{Work-ideal} = \sum_{i}\left\{AC_{Work,i} * x_i\right\} \ ...(38)$$

After that, the maintenance evaluation value calculation module 114 calculates the minimum value of the work cost per unit time in a case where the maintenance work for the maintenance equipment is executed in the target maintenance period (Step S453). The cost calculated in Step S453 is defined as a second comparison cost, and is represented as *AC_(Work-now)*. The second comparison cost can be obtained by using Expression (11) to calculate work *j* required for the maintenance for all pieces of equipment, and assigning *u_j* defined through this calculation to Expression (37).

After that, the maintenance evaluation value calculation module 114 calculates, for each piece of equipment, a difference between the second comparison cost and the second minimum cost as the facility maintenance cost correction value (Step S454). The facility maintenance cost correction value is calculated by using Expression (39).

$$\Delta AC_{Work} = AC_{Work-now} - AC_{Work-ideal} \ ...(39)$$

Here, the second minimum cost refers to a cost per unit time in a case where the maintenance work for each of the pieces of maintenance equipment is executed in the recommended maintenance period. The second comparison cost refers to a cost per unit time in a case where the maintenance work for the pieces of maintenance equipment is simultaneously executed in the recommended maintenance period. Accordingly, the difference between the second comparison cost and the second minimum cost is an index for evaluating a reduction effect of the maintenance cost in a case where the plurality of pieces of equipment are simultaneously maintained.

After that, the maintenance evaluation value calculation module 114 uses the facility maintenance cost loss and the facility maintenance cost correction value of each piece of equipment to calculate the maintenance evaluation value (Step S455). Specifically, Expression (40) is used to calculate the maintenance evaluation value.

$$\Delta AC_{Vehi} = \Delta AC_{Rep} + \Delta AC_{Work} \ ...(40)$$

The maintenance equipment list optimization module 113 in the second embodiment uses the maintenance evaluation value calculated by using Expression (40), to optimize the maintenance equipment list.

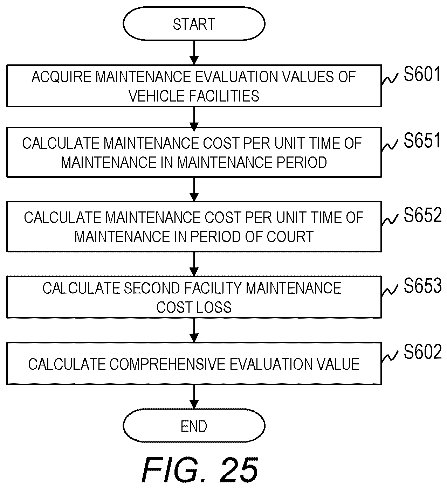

FIG. 25 is a flowchart for illustrating the comprehensive evaluation value calculation processing executed by the maintenance planning assistance system 100 according to the second embodiment.

In the second embodiment, in order to extend the maintenance interval for the vehicle facility as much as possible within the legal maintenance cycle, the second facility maintenance cost loss for evaluating the economic loss in a case where the maintenance is executed at the interval shorter than the legal maintenance cycle is introduced.

Step S601 is the same as that in the first embodiment. After the execution of Step S601, the comprehensive evaluation value calculation module 122 calculates the maintenance cost per unit time of the maintenance based on the maintenance equipment list of the vehicle facility in the target maintenance period (Step S651). The value calculated in Step S651 is defined as a third comparison cost. Specifically, the comprehensive evaluation value calculation module 122 executes the following processing for each vehicle facility.

(S651-1) The comprehensive evaluation value calculation module 122 acquires the facility maintenance cost of each maintenance equipment list of the vehicle facility from the maintenance equipment list information 140.

(S651-2) The comprehensive evaluation value calculation module 122 uses Expression (41) to calculate the maintenance cost per unit time of the maintenance based on the maintenance equipment list of the vehicle facility.

$$AC_{Insp.pqr}(T) = \frac{C_{Work.pq}}{T} \ ...(41)$$

In Expression (41), *C_(Work, pq)* represents the facility maintenance cost of the maintenance equipment list q of the vehicle facility *p,* and *T* represents the maintenance interval. *T* is a period of time from the previous maintenance date and time to the start date and time of the target maintenance period, and is defined by the maintenance date and time *r. AC_Insp, pqr(T)* represents a maintenance cost per unit time in a case where the maintenance based on the maintenance equipment list *q* of the vehicle facility *p* at the maintenance date and time *r* is executed.

After that, the comprehensive evaluation value calculation module 122 calculates the maintenance cost per unit time of the maintenance based on the maintenance equipment list of the vehicle facility in the period corresponding to the maintenance cycle of a court (Step S652). The value calculated in Step S652 is defined as a third minimum cost. A calculation method is the same as that in Step S651. *T* can be obtained from the maintenance date and time 1103 and the maintenance deadline 1104. When the maintenance is executed at the maintenance deadline, the maintenance cost per unit time is minimum.

After that, the comprehensive evaluation value calculation module 122 calculates a difference between the third comparison cost and the third minimum cost as the second facility maintenance cost loss (Step S653). The second facility maintenance cost loss is calculated by using Expression (42).

$$\Delta AC_{Insp.pqr} = AC_{Insp.pqr}(T_r) - AC_{Insp-min.pq} \ldots (42)$$

In Expression (42), $T\_r$ represents the maintenance period at the maintenance date and time *r*. $AC\_(insp, pqr)$ represents the third comparison cost in a case where the facility *p* is maintained in accordance with the maintenance equipment list *q* at the maintenance date and time *r*, and $AC\_(insp-min, pq)$ represents the third minimum cost.

After that, the comprehensive evaluation value calculation module 122 uses the maintenance evaluation values $\Delta AC\_Vehi$ and the second facility maintenance cost losses to calculate the comprehensive evaluation value (Step S602). Specifically, the comprehensive evaluation value calculation module 122 uses Expression (43) to calculate the comprehensive evaluation value.

$$\Delta AC_{All} = \sum_{p,q,r,s} \left\{ \left( \Delta AC_{Vehi,pq} + \Delta AC_{Insp.pqr} \right) * y_{pqrs} \right\} \ldots (43)$$

The maintenance plan optimization module 121 in the second embodiment uses the comprehensive evaluation value calculated by using Expression (43) to optimize the maintenance plan for the system.

The comprehensive evaluation value in the second embodiment is an index considering the deviation of the maintenance time of the equipment from the recommended maintenance period, the reduction effect of the maintenance cost achieved by the simultaneous maintenance of the plurality of pieces of equipment, and the difference between the maintenance period and the maintenance cycle.

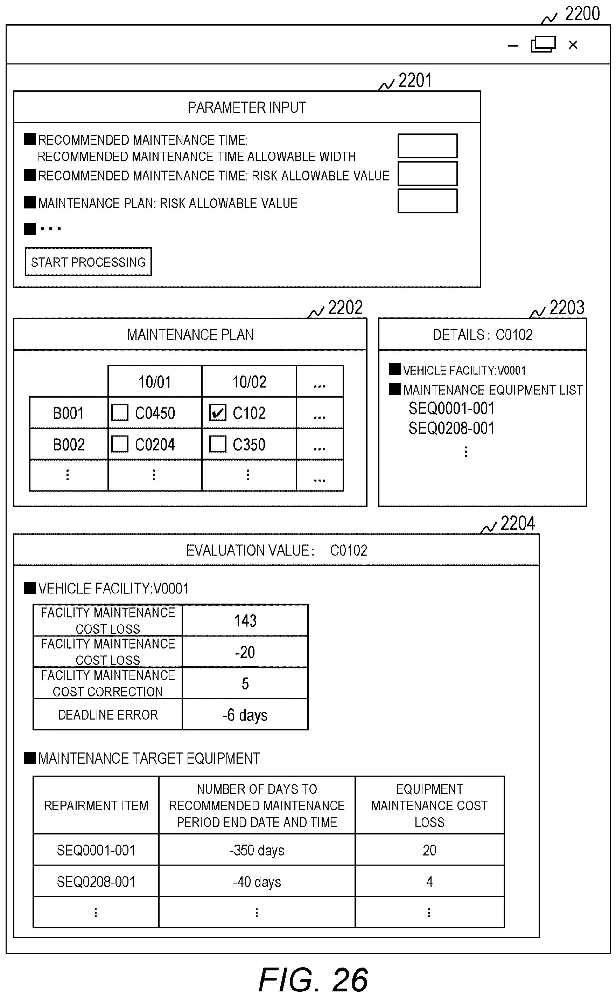

FIG. 26 is a view for illustrating an example of a screen presented by the maintenance planning assistance system 100 according to the second embodiment.

Fields displayed on the screen 2200 in the second embodiment are the same as those on the screen 2200 in the first embodiment. In the second embodiment, the items displayed in the evaluation value output field 2204 are different from those in the first embodiment. Specifically, the second maintenance evaluation value, the third maintenance evaluation value, and a deadline error are displayed. The deadline error indicates a difference between the inspection date and time and the maintenance deadline date and time.

According to the second embodiment, the comprehensive evaluation value is a value considering (1) the maintenance of the equipment at an appropriate time from the medium- to long-term viewpoint, (2) the reduction effect of the maintenance cost achieved by the simultaneous maintenance of the plurality of pieces of equipment, and (3) the extending as much as possible of the maintenance interval of the vehicle facility within the legal maintenance cycle. The three elements are calculated as the costs per unit time, and can be compared with one another. When the maintenance plan for the system which gives a reduced comprehensive loss evaluation value is calculated, it is possible to define the priority of the maintenance plan of each vehicle facility in consideration of the above-mentioned elements, and to generate the maintenance plan for the system appropriate from the medium- to long-term viewpoint.

This invention is not limited to the above-mentioned embodiment, and includes various modification examples. Further, for example, in the above-mentioned embodiment, the configurations are described in detail in order to clearly describe this invention, but this invention is not necessarily limited to an embodiment that includes all the configurations that have been described. Further, another configuration can be added to, deleted from, and replace a part of the configuration of the embodiment.

Moreover, in regard to each of the above-mentioned configurations, functions, processing modules, processing means, and the like, a part thereof or an entirety thereof may be implemented by hardware, for example, by being designed as an integrated circuit. Moreover, this invention can be achieved by program code of software which implements the functions of the embodiment. In this case, a storage medium in which the program code is recorded is provided to a computer, and a processor included in the computer reads out the program code stored in the storage medium. In this case, the program code itself read out from the storage medium implements the above-mentioned functions of the embodiment, and the program code itself and the storage medium storing the program code constitute this invention. As such a storage medium for supplying the program code, for example, a flexible disk, a CD-ROM, a DVD-ROM, a hard disk drive, a solid state drive (SSD), an optical disc, a magneto-optical disk, a CD-R, a magnetic tape, a non-volatile memory card, or a ROM is used.

Moreover, the program code for implementing the functions described in this embodiment can be implemented in a wide range of programs or script languages, for example, an assembler, C/C++, Perl, Shell, PHP, Python, and Java.

Further, the program code of the software for implementing the functions of the embodiment may be distributed through a network, to thereby store the program code in storage means such as a hard disk or a memory of a computer or a storage medium such as a CD-RW or a CD-R, and the processor included in the computer may read out and execute the program code stored in the storage means or the storage medium.

In the above-mentioned embodiment, control lines and information lines that are assumed to be required for the sake of description are illustrated, but not all the control lines and the information lines on a product are illustrated. All the components may be coupled to one another.

**Claims**

1. A maintenance planning assistance system for generating a maintenance plan for a facility which is used for execution of a service and are formed of a plurality of pieces of equipment, the maintenance planning assistance system comprising a computer including a processor, a storage device coupled to the processor, and an interface coupled to the processor,

   wherein the maintenance planning assistance system is configured to:

   couple to a system that operates a plurality of the facilities; and
   hold equipment state information for managing a recommended maintenance time of each of the plurality of pieces of equipment of the facility,
   wherein the recommended maintenance time is a time at which a cost required to maintain the each of the plurality of pieces of equipment is low and a failure rate of the each of the plurality of pieces of equipment is low, and
   wherein the processor is configured to execute:

   first processing of generating, for each facility, a plurality of maintenance equipment lists, each of which is a combination of pieces of equipment of the facility to be maintained at a maintenance time, as a first optimization problem in which a first constraint condition relating to a probability of a defect occurrence in the facility and an evaluation value calculated through use of a facility maintenance cost loss for evaluating an economic loss caused by the maintenance of the each of the plurality of pieces of equipment at a time deviating from the recommended maintenance time are used to search for one of the plurality of maintenance equipment lists; and
   second processing of generating, for each of the plurality of the facilities, a plurality of maintenance plans, each of which is a combination of a maintenance date and time, allocation of a resource, and one of the plurality of maintenance equipment lists, as a second optimization problem in which a second constraint condition relating to a total of the probabilities of the defect occurrence in the facility and the resource required to maintain the each of the plurality of pieces of equipment and a comprehensive evaluation value calculated through use of the evaluation values are used to search for one of the plurality of maintenance plans.

2. The maintenance planning assistance system according to claim 1,
   wherein the processor is, in the first processing, configured to:

   generate a candidate maintenance equipment list for the facility;
   calculate, for each of the plurality of pieces of equipment of the facility, as a first minimum cost, a minimum value of a maintenance cost per unit time in a case where the maintenance is executed at the recommended maintenance time;
   calculate, for each of the plurality of pieces of equipment of the facility, as a first comparison cost, a maintenance cost per unit time in a case where the maintenance is executed in the maintenance period;
   calculate, for each of the plurality of pieces of equipment of the facility, as an equipment maintenance cost loss, a difference between the first comparison cost and the first minimum cost;
   calculate a total of the equipment maintenance cost losses of the plurality of pieces of equipment of the facility as the facility maintenance cost loss;
   calculate the evaluation value through use of a work amount of the maintenance for a piece of equipment to be maintained in the candidate maintenance equipment list and the facility maintenance cost loss; and
   solve the first optimization problem which uses the first constraint condition and the evaluation value, to thereby generate a new candidate maintenance equipment list, and
   wherein the processor is, in the second processing, configured to:

generate a candidate maintenance plan for each of the plurality of the facilities;

calculate, as the comprehensive evaluation value, a total of the evaluation values corresponding to the maintenance equipment list of each of the plurality of candidate maintenance plans; and

solve the second optimization problem which uses the second constraint condition and the comprehensive evaluation value, to thereby generate a new candidate maintenance plan group.

3. The maintenance planning assistance system according to claim 2, wherein the processor is, in the first processing, configured to:

calculate, as a second minimum cost, a minimum value of a cost of work per unit time in a case where all pieces of equipment to be maintained in the candidate maintenance equipment list are maintained at the recommended maintenance time;

calculate, as a second comparison cost, a cost of work per unit time in a case where all the pieces of equipment to be maintained in the candidate maintenance equipment list are maintained at the maintenance time;

calculate a difference between the second comparison cost and the second minimum cost as a facility maintenance cost correction value for evaluating a reduction effect for the maintenance cost in a case where a plurality of pieces of the equipment are simultaneously maintained; and

add the facility maintenance cost loss and the facility maintenance cost correction value to each other, to thereby calculate the evaluation value.

4. The maintenance planning assistance system according to claim 3,

wherein the maintenance planning assistance system is configured to hold information for managing a maintenance deadline of the facility, and

wherein the processor is, in the second processing, configured to:

calculate, as a third minimum cost, the maintenance cost per unit time in a case where all pieces of equipment to be maintained in the maintenance equipment list of the facility are maintained at the maintenance deadline;

calculate, as a third comparison cost, the maintenance cost per unit time in a case where all the pieces of equipment to be maintained in the maintenance equipment list of the facility are maintained in the maintenance period;

calculate a difference between the third comparison cost and the third minimum cost as a second facility maintenance cost loss for evaluating an economic loss in a case where the maintenance is executed at an interval shorter than the maintenance deadline; and

calculate, as the comprehensive evaluation value, a total of the evaluation values and the second facility maintenance cost losses corresponding to the maintenance equipment list of each of the plurality of candidate maintenance plans.

5. The maintenance planning assistance system according to claim 1, wherein the processor is configured to:

select the facility;

generate a maintenance candidate time;

calculate, as a facility failure rate, for each of the plurality of pieces of equipment of the selected facility, a total value of failure rates in a case where the maintenance is executed at the maintenance candidate time;

calculate, as a second evaluation value, for each of the plurality of pieces of equipment of the selected facility, a total of maintenance costs per unit time in a case where the maintenance is executed at the maintenance candidate time;

determine the maintenance candidate period as a third optimization problem in which a constraint condition relating to the facility failure rate and the second evaluation value are used to search for the maintenance candidate period for the plurality of pieces of equipment of the selected facility; and

register, as the recommended maintenance time, in the equipment state information, the maintenance candidate period being an execution result of the third optimization problem.

6. The maintenance planning assistance system according to claim 1,

wherein the maintenance planning assistance system is configured to hold operation information for managing an operation plan for the facility, and

wherein the processor is configured to:

execute update of the operation information of swapping the operation plan for the facility having an older operation start date and time and the operation plan for the facility having a newer operation start date and time with each other in a case where the maintenance plan which does not satisfy the second constraint condition exists; and

execute again the first processing and the second processing.

7. A method for generating facility maintenance plan, which is executed by a maintenance planning assistance system, the facility being used for execution of a service and being formed of a plurality of pieces of equipment,

the maintenance planning assistance system including a computer including a processor, a storage device coupled to the processor, and an interface coupled to the processor,
the maintenance planning assistance system being configured to:

couple to a system that operates a plurality of the facilities; and
hold equipment state information for managing a recommended maintenance time of each of the plurality of pieces of equipment of the facility,
the recommended maintenance time being a time at which a cost required to maintain the each of the plurality of pieces of equipment is low and a failure rate of the each of the plurality of pieces of equipment is low,
the method for generating facility maintenance plan including:

a first step of generating, by the processor, for each facility, a plurality of maintenance equipment lists, each of which is a combination of pieces of equipment of the facility to be maintained at a maintenance time, as a first optimization problem in which a first constraint condition relating to a probability of a defect occurrence in the facility and an evaluation value calculated through use of a facility maintenance cost loss for evaluating an economic loss caused by the maintenance of the each of the plurality of pieces of equipment at a time deviating from the recommended maintenance time are used to search for one of the plurality of maintenance equipment lists; and
a second step of generating, by the processor, for each of the plurality of the facilities, a plurality of maintenance plans, each of which is a combination of a maintenance date and time, allocation of a resource, and one of the plurality of maintenance equipment lists, as a second optimization problem in which a second constraint condition relating to a total of the probabilities of the defect occurrence in the facility and the resource required to maintain the each of the plurality of pieces of equipment and a comprehensive evaluation value calculated through use of the evaluation values are used to search for one of the plurality of maintenance plans.

8. The method for generating facility maintenance plan according to claim 7,
wherein the first step includes the steps of:

generating, by the processor, a candidate maintenance equipment list for the facility;
calculating, by the processor, for each of the plurality of pieces of equipment of the facility, as a first minimum cost, a minimum value of a maintenance cost per unit time in a case where the maintenance is executed at the recommended maintenance time;
calculating, by the processor, for each of the plurality of pieces of equipment of the facility, as a first comparison cost, a maintenance cost per unit time in a case where the maintenance is executed in the maintenance period;
calculating, by the processor, for each of the plurality of pieces of equipment of the facility, as an equipment maintenance cost loss, a difference between the first comparison cost and the first minimum cost;
calculating, by the processor, a total of the equipment maintenance cost losses of the plurality of pieces of equipment of the facility as the facility maintenance cost loss;
calculating, by the processor, the evaluation value through use of a work amount of the maintenance for a piece of equipment to be maintained in the candidate maintenance equipment list and the facility maintenance cost loss; and
solving, by the processor, the first optimization problem which uses the first constraint condition and the evaluation value, to thereby generate a new candidate maintenance equipment list, and
wherein the second step includes the steps of:

generating, by the processor, a candidate maintenance plan for each of the plurality of the facilities;
calculating, by the processor, as the comprehensive evaluation value, a total of the evaluation values corresponding to the maintenance equipment list of each of the plurality of candidate maintenance plans; and

solving, by the processor, the second optimization problem which uses the second constraint condition and the comprehensive evaluation value, to thereby generate a new candidate maintenance plan group.

9. The method for generating facility maintenance plan according to claim 8, wherein the first step includes the steps of:

calculating, by the processor, as a second minimum cost, a minimum value of a cost of work per unit time in a case where all pieces of equipment to be maintained in the candidate maintenance equipment list are maintained at the recommended maintenance time;

calculating, by the processor, as a second comparison cost, a cost of work per unit time in a case where all the pieces of equipment to be maintained in the candidate maintenance equipment list are maintained at the maintenance time;

calculating, by the processor, a difference between the second comparison cost and the second minimum cost as a facility maintenance cost correction value for evaluating a reduction effect for the maintenance cost in a case where a plurality of pieces of the equipment are simultaneously maintained; and

adding, by the processor, the facility maintenance cost loss and the facility maintenance cost correction value to each other, to thereby calculate the evaluation value.

10. The method for generating facility maintenance plan according to claim 9,

wherein the maintenance planning assistance system is configured to hold information for managing a maintenance deadline of the facility, and
wherein the second step includes the steps of:

calculating, by the processor, as a third minimum cost, the maintenance cost per unit time in a case where all pieces of equipment to be maintained in the maintenance equipment list of the facility are maintained at the maintenance deadline;

calculating, by the processor, as a third comparison cost, the maintenance cost per unit time in a case where all the pieces of equipment to be maintained in the maintenance equipment list of the facility are maintained in the maintenance period;

calculating, by the processor, a difference between the third comparison cost and the third minimum cost as a second facility maintenance cost loss for evaluating an economic loss in a case where the maintenance is executed at an interval shorter than the maintenance deadline; and

calculating, by the processor, as the comprehensive evaluation value, a total of the evaluation values and the second facility maintenance cost losses corresponding to the maintenance equipment list of each of the plurality of candidate maintenance plans.

11. The method for generating facility maintenance plan according to claim 7, further comprising the steps of:

selecting, by the processor, the facility;

generating, by the processor, a maintenance candidate time;

calculating, by the processor, as a facility failure rate, for each of the plurality of pieces of equipment of the selected facility, a total value of failure rates in a case where the maintenance is executed at the maintenance candidate time;

calculating, by the processor, as a second evaluation value, for each of the plurality of pieces of equipment of the selected facility, a total of maintenance costs per unit time in a case where the maintenance is executed at the maintenance candidate time;

determining, by the processor, the maintenance candidate period as a third optimization problem in which a constraint condition relating to the facility failure rate and the second evaluation value are used to search for the maintenance candidate period for the plurality of pieces of equipment of the selected facility; and

registering, by the processor, as the recommended maintenance time, in the equipment state information, the maintenance candidate period being an execution result of the third optimization problem.

12. The method for generating facility maintenance plan according to claim 7,

wherein the maintenance planning assistance system is configured to hold operation information for managing an operation plan for the facility,
wherein the method further includes:

a step of executing, by the processor, update of the operation information of swapping the operation plan for the facility having an older operation start date and time and the operation plan for the facility having a newer operation start date and time with each other in a case where the maintenance plan which does not satisfy the second constraint condition exists; and

executing again, by the processor, the first step and the second step.

/100

MAINTENANCE PLAN DRAFTING SUPPORT SYSTEM

/101

MAINTENANCE EQUIPMENT LIST
GENERATION MODULE

LOAD CALCULATION
MODULE /111

RECOMMENDED MAINTENANCE
PERIOD CALCULATION MODULE /112

MAINTENANCE EQUIPMENT
LIST OPTIMIZATION /113

MAINTENANCE EVALUATION
VALUE CALCULATION MODULE /114

/102

MAINTENANCE PLAN GENERATION
MODULE

MAINTENANCE PLAN
OPTIMIZATION MODULE /121

COMPREHENSIVE EVALUATION
VALUE CALCULATION MODULE /122

ADJUSTMENT MODULE /123

SERVICE OPERATION
INFORMATION /131

RAILWAY STATE
INFORMATION /132

VEHICLE FACILITY
OPERATION INFORMATION /133

EQUIPMENT STATE
INFORMATION /134

EQUIPMENT SPECIFICATION
INFORMATION /135

MAINTENANCE WORK
INFORMATION /136

WORK TRACK
INFORMATION /137

WORKER INFORMATION /138

MAINTENANCE DEADLINE
INFORMATION /139

MAINTENANCE EQUIPMENT
LIST INFORMATION /140

MAINTENANCE PLAN
INFORMATION /141

*FIG. 1*

/200

COMPUTER

/201 PROCESSOR

/202 MAIN STORAGE
DEVICE

/203 AUXILIARY STORAGE
DEVICE

/204 INPUT DEVICE

/205 DISPLAY DEVICE

/206 COMMUNICATION
DEVICE

*FIG. 2*

| OPERATION PLAN ID | START STATION | END STATION | RAILWAY SECTION ID | NUMBER OF ROUND TRIPS | OPERATION METHOD | OPERATION LOAD VALUE |
|---|---|---|---|---|---|---|
| U1001 | B | B | S001 | 10 | LOCAL TRAIN | 297.6 |
| U1002 | B | B | S002 | 10 | EXPRESS TRAIN | 753.6 |
| U1003 | A | B | S001 | 7.5 | LOCAL TRAIN | 222.4 |
| U1004 | C | A | S002 | 4.5 | LOCAL TRAIN | 324.3 |
| ⋮ | ⋮ | ⋮ | ⋮ | ⋮ | ⋮ | ⋮ |

*FIG. 3*

EP 4 726 627 A1

| RAILWAY SECTION ID | RAILWAY SECTION | SECTION DISTANCE [km] | INSTALLATION DATE AND TIME | INSPECTION DATE AND TIME | DETERIORATION COEFFICIENT |
|---|---|---|---|---|---|
| 401 | 402 | 403 | 404 | 405 | 406 |
| S001 | A-B | 37.2 | 2015/05/12 | 2021/01/09 | 0.8 |
| S002 | B-C | 62.8 | 2016/03/04 | 2021/03/20 | 1.2 |
| ⋮ | ⋮ | ⋮ | ⋮ | ⋮ | ⋮ |

132

FIG. 4

| 133 → | VEHICLE FACILITY ID (501) | LOAD REDUCTION TARGET (502) | OPERATION PLAN (503) | | |
|---|---|---|---|---|---|
| | | | 2022/ 10/01 | 2022/ 10/02 | ... |
| | V0001 | ABSENT | U1001 | U1002 | ... |
| | V0002 | ABSENT | U1002 | U1002 | ... |
| | V0003 | ABSENT | U1003 | U1003 | ... |
| | V0004 | ABSENT | U1002 | U1001 | ... |
| | ⋮ | ⋮ | ⋮ | ⋮ | ... |

*FIG. 5*

134

| EQUIPMENT ID 601 | VEHICLE FACILITY ID 602 | USE START DATE AND TIME 603 | MAINTENANCE DATE AND TIME 604 | FAILURE DATE AND TIME 605 |
|---|---|---|---|---|
| SEQ0001-001 | V0001 | 2017/01/14 | 2021/01/09 | - |
| SEQ0002-001 | V0002 | 2017/10/12 | - | 2019/12/05 |
| SEQ0001-002 | V0001 | 2021/01/09 | - | - |
| SEQ0001-003 | V0002 | 2022/01/15 | - | - |
| ... | ... | ... | ... | ... |

| TRAVEL LOAD ACCUMULATION VALUE 606 | TRAVEL LOAD PREDICTION VALUE 607 | OPTIMAL MAINTENANCE DATE AND TIME 608 | START DATE AND TIME 609 | END DATE AND TIME 610 |
|---|---|---|---|---|
| 150,000 | - | 2025/04/28 | 2024/04/28 | 2026/04/28 |
| 500,000 | - | 2025/05/12 | 2024/05/12 | 2027/02/12 |
| 60,000 | 5,000 | 2024/04/28 | 2023/03/11 | 2024/12/11 |
| 30,000 | 7,000 | 2027/04/12 | 2027/03/11 | 2029/12/11 |
| ... | ... | ... | ... | ... |

*FIG. 6*

| EQUIPMENT TYPE ID | FAILURE LOSS COST [¥] | MAINTENANCE COST [¥] | SERVICE LIFE MODEL PARAMETER | | MAINTENANCE FUNCTION LIST | | | MAINTENANCE WORK LIST | | |
|---|---|---|---|---|---|---|---|---|---|---|
| | | | m | η | MAINTENANCE FUNCTION A | MAINTENANCE FUNCTION B | ... | S0001 | S0002 | ... |
| SEQ0001 | 100,000,000 | 2,000,000 | 3.2 | 14 | 1 | 0 | ... | 1 | 0 | ... |
| SEQ0002 | 20,000,000 | 3,000,000 | 2.1 | 30 | 0 | 1 | ... | 0 | 1 | ... |
| SEQ0003 | 4,000,000 | 1,000,000 | 5.5 | 25 | 1 | 1 | ... | 0 | 0 | ... |
| SEQ0004 | 20,000,000 | 500,000 | 6.3 | 21 | 1 | 1 | ... | 1 | 1 | ... |
| SEQ0005 | 4,000,000 | 2,000,000 | 2.2 | 30 | 0 | 0 | ... | 0 | 0 | ... |
| ⋮ | ⋮ | ⋮ | ⋮ | ⋮ | ⋮ | ⋮ | ⋮ | ⋮ | ⋮ | ⋮ |

*FIG. 7*

136

| MAINTENANCE WORK ID | WORK CONTENT | WORK AMOUNT [h] | PARALLEL WORK ID | WORK COST [¥] |
|---|---|---|---|---|
| | 801 | 802 | 803 | 804 | 805 |
| S0001 | REPLACEMENT OF SEQ0001 | 4.0 | 1001 | 70,000 |
| S0002 | REPLACEMENT OF SEQ0002 | 1.5 | 1001 | 50,000 |
| S0003 | REPLACEMENT OF SEQ0003 | 8.0 | 1002 | 200,000 |
| ⋮ | ⋮ | ⋮ | ⋮ | ⋮ |
| S0100 | UNDERFLOOR WORK PREPARATION | 2.5 | 1000 | 100,000 |
| ⋮ | ⋮ | ⋮ | ⋮ | ⋮ |

## FIG. 8

137

| TRACK ID | MAINTENANCE FUNCTION LIST | | | POSSIBLE STAY TIME [h] | | |
|---|---|---|---|---|---|---|
| | MAINTENANCE FUNCTION A | MAINTENANCE FUNCTION B | ... | 2022/ 10/01 | 2022/ 10/02 | ... |
| B001 | 1 | 1 | ... | 8.0 | 0.0 | ... |
| B002 | 0 | 1 | ... | 2.0 | 12.0 | ... |
| B003 | 1 | 1 | ... | 6.0 | 0.0 | ... |
| B004 | 1 | 0 | ... | 12.0 | 12.0 | ... |
| ⋮ | ⋮ | ⋮ | ⋮ | ⋮ | ⋮ | ⋮ |

## FIG. 9

138    1001        1002

| WORKER ID | WORK SCHEDULE [h] | | |
|---|---|---|---|
| | 2022/ 10/01 | 2022/ 10/02 | ... |
| 12345670 | 8.0 | 8.0 | ... |
| 12345677 | 8.0 | 8.0 | ... |
| 12345678 | 8.0 | 0.0 | ... |
| 12345679 | 3.0 | 8.0 | ... |
| ⋮ | ⋮ | ⋮ | ⋮ |

*FIG. 10*

139   1101      1102      1103      1104

| VEHICLE FACILITY ID | OPERATION START DATE AND TIME | MAINTENANCE DATE AND TIME | MAINTENANCE DEADLINE |
|---|---|---|---|
| S0001 | 2015/05/12 | 2023/01/09 | 2023/04/05 |
| S0002 | 2016/03/04 | 2023/03/20 | 2023/06/20 |
| S0003 | 2011/04/03 | 2023/02/25 | 2023/05/25 |
| S0100 | 2006/10/03 | 2023/04/04 | 2023/07/04 |
| ⋮ | ⋮ | ⋮ | ⋮ |

*FIG. 11*

EP 4 726 627 A1

140

| LIST ID | VEHICLE FACILITY ID | MAINTENANCE EQUIPMENT LIST | FACILITY MAINTENANCE COST LOSS | EQUIPMENT MAINTENANCE COST LOSS | | FACILITY FAILURE RATE |
|---|---|---|---|---|---|---|
| | | | | SEQ0001-001 | ... | |
| C0101 | V0001 | SEQ0001-001, ... | 110.5 | 24 | ... | $2.2 \times 10^{-4}$ |
| C0102 | V0001 | SEQ0002-001,... | 23.6 | 0 | ... | $3.1 \times 10^{-4}$ |
| ⋮ | ⋮ | ⋮ | ⋮ | ⋮ | ... | ⋮ |
| C0201 | V0002 | SEQ0001-003,... | 10.8 | 30 | ... | $2.2 \times 10^{-4}$ |
| ⋮ | ⋮ | ⋮ | ⋮ | ⋮ | ⋮ | |

| FACILITY MAINTENANCE COST [¥] | FACILITY WORK AMOUNT [h] | TRACK STAY TIME [h] | MAINTENANCE FUNCTION LIST | |
|---|---|---|---|---|
| | | | WORK FUNCTION A | ... |
| 100,000,000 | 6.0 | 4.0 | 0 | ... |
| 50,000,000 | 4.0 | 4.0 | 1 | ... |
| ⋮ | ⋮ | ⋮ | ⋮ | ... |
| 35,000,000 | 2.0 | 2.0 | 0 | ... |
| ⋮ | ⋮ | ⋮ | ⋮ | ⋮ |

*FIG. 12*

| | PLAN ID | VEHICLE FACILITY ID | SCHEDULED MAINTENANCE DATE AND TIME | TRACK ID | LIST ID | MAINTENANCE EVALUATION VALUE |
|---|---|---|---|---|---|---|
| | 1301 | 1302 | 1303 | 1304 | 1305 | 1306 |
| | I000001 | V0001 | 2023/04/16 | B001 | C102 | 23.6 |
| | I000002 | V0002 | 2023/04/18 | B001 | C204 | 10.8 |
| | I000003 | V0003 | 2023/04/16 | B003 | C325 | 52.3 |
| | I000004 | V0004 | 2023/04/20 | B002 | C450 | 37.2 |
| | ⋮ | ⋮ | ⋮ | ⋮ | ⋮ | ⋮ |

141

*FIG. 13*

EP 4 726 627 A1

START

TRAVEL LOAD CALCULATION PROCESSING ⟋ S100

RECOMMENDED MAINTENANCE PERIOD PROCESSING ⟋ S200

MAINTENANCE EQUIPMENT LIST OPTIMIZATION PROCESSING ⟋ S400 ⟋ S300

MAINTENANCE EVALUATION VALUE CALCULATION PROCESSING

MAINTENANCE PLAN OPTIMIZATION PROCESSING ⟋ S600 ⟋ S500

COMPREHENSIVE EVALUATION VALUE CALCULATION PROCESSING

⟋ S700

CONSTRAINTS ARE SATISFIED? — NO

⟋ S800

YES

LOAD ADJUSTMENT PROCESSING

END

## FIG. 14

START

CALCULATE OPERATION LOAD VALUE OF OPERATION PLAN ⟋ S101

CALCULATE TRAVEL LOAD PREDICTION VALUE OF VEHICLE FACILITY ⟋ S102

CALCULATE TRAVEL LOAD ACCUMULATION VALUE OF VEHICLE FACILITY ⟋ S103

END

## FIG. 15

START

SELECT VEHICLE FACILITY ～ S201

CALCULATE FAILURE CURVE OF EQUIPMENT ～ S202

SET MAINTENANCE CANDIDATE TIME OF EQUIPMENT ～ S203

CALCULATE AVERAGE FAILURE RATE OF EQUIPMENT ～ S204

CALCULATE MAINTENANCE COST PER UNIT TIME OF EQUIPMENT ～ S205

S206
CONSTRAINT CONDITION IS SATISFIED AND EVALUATION VALUE HAS BEEN IMPROVED?   NO

YES

DETERMINE OPTIMAL MAINTENANCE DATE AND TIME OF EQUIPMENT ～ S207

DETERMINE START DATE AND TIME AND END DATE AND TIME OF RECOMMENDED MAINTENANCE PERIOD OF EQUIPMENT ～ S208

S209
PROCESSING HAS BEEN COMPLETED FOR ALL VEHICLE FACILITIES?   NO

YES

END

*FIG. 16*

START

SELECT VEHICLE FACILITY — S301

SET OPTIMIZATION CONDITION — S302

GENERATE MAINTENANCE EQUIPMENT LIST — S303

INSTRUCT EXECUTION OF MAINTENANCE EVALUATION VALUE CALCULATION PROCESSING — S304

CALCULATE FACILITY WORK AMOUNT — S305

CALCULATE TRACK STAY TIME — S306

IDENTIFY WORK TRACK AVAILABLE FOR EXECUTION OF MAINTENANCE — S307

CALCULATE FACILITY FAILURE RATE — S308

CALCULATE FACILITY MAINTENANCE COST — S309

S310
NO — CONSTRAINT CONDITIONS ARE SATISFIED AND EVALUATION VAHE HAS BEEN IMPROVED?

YES

REGISTER MAINTENANCE EQUIPMENT LIST — S311

S312
YES — NEW OPTIMIZATION CONDITION IS TO BE SET?

NO

S313
NO — PROCESSING HAS BEEN COMPLETED FOR ALL VEHICLE FACILITIES?

YES

END

FIG. 17

START

CALCULATE MINIMUM VALUE OF MAINTENANCE COST PER UNIT TIME IN RECOMMENDED MAINTENANCE PERIOD OF EQUIPMENT ∿ S401

CALCULATE MAINTENANCE COST PER UNIT TIME IN TARGET MAINTENANCE PERIOD OF EQUIPMENT ∿ S402

CALCULATE EQUIPMENT MAINTENANCE COST LOSS ∿ S403

CALCULATE FACILITY MAINTENANCE COST LOSS ∿ S404

CALCULATE MAINTENANCE EVALUATION VALUE ∿ S405

END

*FIG. 18*

START

CALCULATE POSSIBLE WORK TIME AND POSSIBLE STAY TIME — S501

GENERATE MAINTENANCE PLAN — S502

INSTRUCT EXECUTION OF COMPREHENSIVE EVALUATION VALUE CALCULATION PROCESSING — S503

CALCULATE TOTAL OF FACILITY FAILURE RATES — S504

CALCULATE FACILITY WORK AMOUNT AT MAINTENANCE DATE AND TIME — S505

CALCULATE STAY TIME ON TRACK AT MAINTENANCE DATE AND TIME — S506

CONSTRAINT CONDITIONS ARE SATISFIED? — S507
NO

YES

COMPREHENSIVE EVALUATION VALUE HAS BEEN IMPROVED? — S508
NO

YES

CALCULATE STAY TIME ON TRACK AT MAINTENANCE DATE AND TIME — S509

END

*FIG. 19*

START

ACQUIRE MAINTENANCE EVALUATION VALUES OF VEHICLE FACILITIES — S601

CALCULATE COMPREHENSIVE EVALUATION VALUE — S602

END

*FIG. 20*

```
                        ┌──────────────┐
                        │    START     │
                        └──────┬───────┘
                               │
         ┌─────────────────────▼──────────────────────┐
         │  SELECT VEHICLE FACILITY HAVING TRAVEL LOAD TO │ ～ S801
         │              BE REDUCED                        │
         └─────────────────────┬──────────────────────┘
                               │
         ┌─────────────────────▼──────────────────────┐
         │  SELECT OPERATION PLAN FOR SELECTED VEHICLE │ ～ S802
         │              FACILITY                        │
         └─────────────────────┬──────────────────────┘
                               │                  ～ S803
         ┌─────────────────────▼──────────────────────┐
    NO   │  THERE IS VEHICLE FACILITY FOR WHICH OPERATION │
 ◄───────┤ PLAN HAVING SAME START STATION AND END STATION AS │
         │  THOSE OF SELECTED OPERATION PLAN IS EXECUTED? │
         └─────────────────────┬──────────────────────┘
                               │ YES
         ┌─────────────────────▼──────────────────────┐
         │  IDENTIFY VEHICLE FACILITY HAVING MINIMUM   │ ～ S804
         │              OPERATION LOAD                  │
         └─────────────────────┬──────────────────────┘
                               │
         ┌─────────────────────▼──────────────────────┐
         │         SWITCH OPERATION PLANS              │ ～ S805
         └─────────────────────┬──────────────────────┘
                               │                  ～ S806
         ┌─────────────────────▼──────────────────────┐
    NO   │  PROCESSING HAS BEEN COMPLETED FOR ALL      │
 ◄───────┤              OPERATION PLANS?               │
         └─────────────────────┬──────────────────────┘
                               │ YES
         ┌─────────────────────▼──────────────────────┐
         │  UPDATE VEHICLE FACILITY OPERATION INFORMATION │ ～ S807
         └─────────────────────┬──────────────────────┘
                               │
                        ┌──────▼───────┐
                        │     END      │
                        └──────────────┘
```

*FIG. 21*

~ 2200

| | − ▢ ✕ |

~ 2201

**PARAMETER INPUT**

■RECOMMENDED MAINTENANCE TIME:
  RECOMMENDED MAINTENANCE TIME ALLOWABLE WIDTH

■RECOMMENDED MAINTENANCE TIME: RISK ALLOWABLE VALUE

■MAINTENANCE PLAN: RISK ALLOWABLE VALUE

■ ・・・

START PROCESSING

~ 2202

**MAINTENANCE PLAN**

| | 10/01 | 10/02 | ... |
|---|---|---|---|
| B001 | ☐ C0450 | ☑ C102 | ... |
| B002 | ☐ C0204 | ☐ C350 | ... |
| ⋮ | ⋮ | ⋮ | ... |

~ 2203

**DETAILS : C0102**

■VEHICLE FACILITY:V0001

■MAINTENANCE EQUIPMENT LIST
  SEQ0001-001
  SEQ0208-001
  ⋮

~ 2204

**EVALUATION VALUE : C0102**

■VEHICLE FACILITY:V0001

| FACILITY MAINTENANCE COST LOSS | 143 |
|---|---|

■MAINTENANCE TARGET EQUIPMENT

| REPAIRMENT ITEM | NUMBER OF DAYS TO RECOMMENDED MAINTENANCE PERIOD END DATE AND TIME | EQUIPMENT MAINTENANCE COST LOSS |
|---|---|---|
| SEQ0001-001 | -350 days | 20 |
| SEQ0208-001 | -40 days | 4 |
| ⋮ | ⋮ | ⋮ |

## FIG. 22

EP 4 726 627 A1

| | LIST ID | VEHICLE FACILITY ID | MAINTENANCE EQUIPMENT LIST | FACILITY MAINTENANCE COST LOSS | EQUIPMENT MAINTENANCE COST LOSS | | FACILITY MAINTENANCE COST CORRECTION VALUE | FACILITY FAILURE RATE |
|---|---|---|---|---|---|---|---|---|
| | | | | | SEQ0001-001 | ... | | |
| | C0101 | V0001 | SEQ0001-001, ... | 110.5 | 24 | ... | -30 | $2.2 \times 10^{-4}$ |
| | C0102 | V0001 | SEQ0002-001,... | 23.6 | 0 | ... | -10 | $3.1 \times 10^{-4}$ |
| | ⋮ | ⋮ | ⋮ | ⋮ | ⋮ | ... | ⋮ | ⋮ |
| | C0201 | V0002 | SEQ0001-003,... | 10.8 | 30 | ... | 12 | $2.2 \times 10^{-4}$ |
| | ⋮ | ⋮ | ⋮ | ⋮ | ⋮ | ⋮ | ⋮ | ⋮ |

Column labels: 140, 1201, 1202, 1203, 1204, 1205, 1251, 1206

| FACILITY MAINTENANCE COST [¥] | FACILITY WORK AMOUNT [h] | TRACK STAY TIME [h] | MAINTENANCE FUNCTION LIST | |
|---|---|---|---|---|
| | | | WORK FUNCTION A | ... |
| 100,000,000 | 6.0 | 4.0 | 0 | ... |
| 50,000,000 | 4.0 | 4.0 | 1 | ... |
| ⋮ | ⋮ | ⋮ | ⋮ | ... |
| 35,000,000 | 2.0 | 2.0 | 0 | ... |
| ⋮ | ⋮ | ⋮ | ⋮ | ⋮ |

Column labels: 1207, 1208, 1209, 1210

*FIG. 23*

START

CALCULATE MINIMUM VALUE OF MAINTENANCE COST PER UNIT TIME IN RECOMMENDED MAINTENANCE PERIOD OF EQUIPMENT — S401

CALCULATE MAINTENANCE COST PER UNIT TIME IN TARGET MAINTENANCE PERIOD OF EQUIPMENT — S402

CALCULATE EQUIPMENT MAINTENANCE COST LOSS — S403

CALCULATE FACILITY MAINTENANCE COST LOSS — S404

IDENTIFY MAINTENANCE WORK — S451

CALCULATE MINIMUM VALUE OF WORK COST IN RECOMMENDED MAINTENANCE PERIOD — S452

CALCULATE MINIMUM VALUE OF WORK COST IN MAINTENANCE PERIOD — S453

CALCULATE FACILITY MAINTENANCE COST CORRECTION VALUE — S454

CALCULATE MAINTENANCE EVALUATION VALUE — S455

END

*FIG. 24*

START

ACQUIRE MAINTENANCE EVALUATION VALUES OF VEHICLE FACILITIES — S601

CALCULATE MAINTENANCE COST PER UNIT TIME OF MAINTENANCE IN MAINTENANCE PERIOD — S651

CALCULATE MAINTENANCE COST PER UNIT TIME OF MAINTENANCE IN PERIOD OF COURT — S652

CALCULATE SECOND FACILITY MAINTENANCE COST LOSS — S653

CALCULATE COMPREHENSIVE EVALUATION VALUE — S602

END

FIG. 25

~ 2200

~ 2201

PARAMETER INPUT

■ RECOMMENDED MAINTENANCE TIME:
  RECOMMENDED MAINTENANCE TIME ALLOWABLE WIDTH
■ RECOMMENDED MAINTENANCE TIME: RISK ALLOWABLE VALUE

■ MAINTENANCE PLAN: RISK ALLOWABLE VALUE

■ · · ·

START PROCESSING

~ 2202

MAINTENANCE PLAN

|  | 10/01 | 10/02 | ... |
|---|---|---|---|
| B001 | ☐ C0450 | ☑ C102 | ... |
| B002 | ☐ C0204 | ☐ C350 | ... |
| ⋮ | ⋮ | ⋮ | ... |

~ 2203

DETAILS : C0102

■ VEHICLE FACILITY:V0001
■ MAINTENANCE EQUIPMENT LIST
  SEQ0001-001
  SEQ0208-001
  ⋮

~ 2204

EVALUATION VALUE :  C0102

■ VEHICLE FACILITY:V0001

| FACILITY MAINTENANCE COST LOSS | 143 |
|---|---|
| FACILITY MAINTENANCE COST LOSS | -20 |
| FACILITY MAINTENANCE COST CORRECTION | 5 |
| DEADLINE ERROR | -6 days |

■ MAINTENANCE TARGET EQUIPMENT

| REPAIRMENT ITEM | NUMBER OF DAYS TO RECOMMENDED MAINTENANCE PERIOD END DATE AND TIME | EQUIPMENT MAINTENANCE COST LOSS |
|---|---|---|
| SEQ0001-001 | -350 days | 20 |
| SEQ0208-001 | -40 days | 4 |
| ⋮ | ⋮ | ⋮ |

FIG. 26

## INTERNATIONAL SEARCH REPORT

| International application No. |
| --- |
| **PCT/JP2024/000023** |

**A. CLASSIFICATION OF SUBJECT MATTER**

*G06Q 10/20*(2023.01)i; *G06Q 10/04*(2023.01)i; *G06Q 50/40*(2024.01)i
FI: G06Q10/20; G06Q10/04; G06Q50/40

According to International Patent Classification (IPC) or to both national classification and IPC

**B. FIELDS SEARCHED**

Minimum documentation searched (classification system followed by classification symbols)

G06Q10/20; G06Q10/04; G06Q50/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2017/175449 A1 (HITACHI, LTD.) 12 October 2017 (2017-10-12) entire text, all drawings | 1-12 |
| A | WO 2016/125248 A1 (HITACHI, LTD.) 11 August 2016 (2016-08-11) entire text, all drawings | 1-12 |
| A | WO 2014/061080 A1 (HITACHI, LTD.) 24 April 2014 (2014-04-24) entire text, all drawings | 1-12 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 March 2024** | **26 March 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/000023**

| Patent document cited in search report | | | Publication date (day/month/year) | Patent family member(s) | | | Publication date (day/month/year) |
|---|---|---|---|---|---|---|---|
| WO | 2017/175449 | A1 | 12 October 2017 | CN | 108701332 | A | |
| WO | 2016/125248 | A1 | 11 August 2016 | (Family: none) | | | |
| WO | 2014/061080 | A1 | 24 April 2014 | CA | 2888334 | A | |

Form PCT/ISA/210 (patent family annex) (July 2022)

**EP 4 726 627 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020004403 A

- JP 2022181069 A